# EUROPÄISCHE PATENTSCHRIFT

(11) **EP 4 416 444 B1**
(45) Veröffentlichungstag und Bekanntmachung des Hinweises auf die Patenterteilung: **15.07.2026**
(21) Anmeldenummer: 22797627.1
(22) Anmeldetag: 13.10.2022
(51) Int. Cl.: F27B 5/12, F27B 5/13, F27B 11/00, F27B 17/00, F27D 3/00

(54) **INDUSTRIEOFENANLAGE**
INDUSTRIAL FURNACE SYSTEM
SYSTÈME DE FOUR INDUSTRIEL

(30) Priorität: 15.10.2021 AT 508262021
(43) Veröffentlichungstag der Anmeldung: 21.08.2024
(73) Patentinhaber: EBNER Industrieofenbau GmbH, 4060 Leonding (AT)
(72) Erfinder: EBNER, Robert, 4810 Gmunden (AT); LI, Tong, 4060 Leonding (AT); HAMMER, Rene, 8010 Graz (AT); DEFREGGER, Stefan, 8501 Lieboch (AT)
(74) Vertreter: Burger, Hannes
(86) Internationale Anmeldenummer: PCT/AT2022/060357
(87) Internationale Veröffentlichungsnummer: WO 2023/060294

(56) Entgegenhaltungen:
- EP-A1- 2 442 057
- WO-A1-2004/113813
- DE-A1- 102012 019 653
- JP-A- 2000 018 829
- US-A1- 2017 025 291

## Beschreibung

Die Erfindung betrifft eine Industrieofenanlage, insbesondere zur Herstellung von keramischen Werkstoffen und/oder Karbiden, insbesondere Siliziumkarbid, umfassend zumindest einen Ofen, insbesondere Reaktionsofen, mit einer - vorzugsweise evakuierbaren und/oder mit inerter Atmosphäre beaufschlagbaren - Kammer, insbesondere Reaktionskammer, die eine, vorzugsweise an ihrer Unterseite angeordnete, Beschickungsöffnung zum Beschicken der Kammer mit einem mit - vorzugsweise pulverförmigem - Ausgangsmaterial befüllten Tiegel aufweist, einer Heizeinrichtung, vorzugsweise in Form einer Induktionsspule und/oder Induktionsheizung, zum Erwärmen eines in die Kammer eingebrachten Ausgangsmaterials und einer Verschlusseinrichtung für die Beschickungsöffnung, welche Verschlusseinrichtung zwischen einer geschlossenen Stellung und einer freigebenden Stellung betätigbar ist, und
eine Steuereinrichtung zum Steuern des zumindest einen Ofens.

Die Erfindung bezieht auch auf ein Verfahren zum Betreiben einer Industrieofenanlage und ein Verfahren zur Herstellung von keramischen Werkstoffen und/oder Karbiden.

Die DE102012019653A1 offenbart einen mit Schutzgas beaufschlagten Industrieofen. Eine Eingangsschleuse ist sowohl gegenüber der Umgebung, als auch gegenüber einer Heiz- und Wärmebehandlungskammer durch eine gasdichte Verschlusseinrichtung abgedichtet. Bei einer vertikalen Anordnung weist die Eingangsschleuse eine erste und eine zweite Schleusenkammer übereinander liegend auf, die durch einen integrierten, gasdichten Hubelevator voneinander trennbar sind. Die erste Schleusenkammer ist gegenüber der Umgebung durch eine gasdichte Eingangstür abgeschlossen. Die zweite Schleusenkammer ist gegenüber einer Heizkammer eines nachgeordneten Industrieofens durch eine gasundichte Tür getrennt.

Die US2017025291A1 offenbart einen Mehrfach-Kammer Ofen zum Behandeln von Halbleiter-Wafern. Dabei definieren Reaktorgehäuse eine Mehrzahl an seitlich voneinander beabstandeten Reaktorkammern. Ein Roboter ist konfiguriert, um die Substrate eines Batches in Substrathaltern zu platzieren und aus den Substrathaltern zu nehmen, und erleichtert dadurch das Laden und Entladen des Batches.

Die WO2004113813A1 offenbart eine Vorrichtung zum Pressen von dentalkeramischer Masse für die Herstellung von Zahnersatz, mit einem Oberteil und einem relativ zum Oberteil verschiebbaren Unterteil, wobei das Oberteil und das Unterteil in einer geschlossenen Stellung eine Brennkammer bilden. In der Brennkammer ist eine - eine Negativform für den Zahnersatz aufweisende - Muffel aufgenommen, in die ein Stempel einschiebbar ist.

Die Herstellung von Materialen und Hochleistungs-Werkstoffen, wie z.B. Keramiken, erfordern Industrieofenanlagen. Unter den Begriff Herstellung fällt auch die (Nach-)Behandlung von (Zwischen-)Produkten, wie z.B. das Sintern. In Industrieanwendungen stellt insbesondere das Beschicken solcher Öfen eine große Herausforderung dar. Einerseits muss beim Entladen der Öfen auf die hohen Temperaturen Rücksicht genommen werden, andererseits sollte die Zeitspanne des Entladens und Wieder-Beladens des Ofens möglichst kurz sein. Es besteht daher der Bedarf einer schnellen, zuverlässigen und temperaturresistenten Ent-/Beladen. Dabei wird ein außerhalb des Ofens vorbereiteter Tiegel mit Ausgangsmaterial in eine Kammer des Ofens eingebracht und dort aufgeheizt. Nach dem Erwärmen bzw. Erhitzen des Ausgangsmaterials, wodurch z.B. eine (exotherme) Reaktion oder ein (Reaktions-)Sintervorgang ausgelöst wird, muss der Tiegel mit dem (Reaktions-)Produkt wieder aus der Kammer entfernt werden.

Aufgabe der vorliegenden Erfindung war es, die Nachteile des Standes der Technik zu überwinden und eine Industrieofenanlage und ein Verfahren zu deren Betrieb zur Verfügung zu stellen, mittels derer ein schnelles und zuverlässiges Entladen des Tiegels aus der Kammer des Ofens bewerkstelligt werden kann. Dabei soll auch die Möglichkeit geschaffen werden, die Entladung möglichst bald nach der Behandlung des Materials, d.h. bei noch erhöhten Temperaturen, vornehmen zu können. Der erforderliche Eingriff einer Bedienperson soll dabei auf ein Minimum beschränkt werden.

Diese Aufgabe wird durch eine Industrieofenanlage und Verfahren gemäß den Ansprüchen gelöst. Die Industrieofenanlage umfasst eine Transfereinrichtung, vorzugsweise in Form eines Roboters, zum Transferieren eines durch die Beschickungsöffnung in die Kammer einbringbaren Tiegels zu dem und/oder von dem Ofen, vorzugsweise zwischen dem Ofen und einer Belade- und/oder Entladestation zum Be- und/oder Entladen eines Tiegels oder einer Übergabestation,
wobei die Steuereinrichtung dazu eingerichtet ist, zur Entnahme eines Tiegels aus der Kammer
die Verschlusseinrichtung - in Abhängigkeit von der Position der Transfereinrichtung und/oder der Position eines Endeffektors der Transfereinrichtung - (aus der geschlossenen Stellung) in die freigebende Stellung zu bringen, wobei die Verschlusseinrichtung zumindest einen eigenen, von der Transfereinrichtung gesonderten Aktuator, der die Betätigung zwischen der geschlossenen Stellung und der freigebenden Stellung bewirkt, umfasst und wobei die Transfereinrichtung als Trigger dient, derart, dass bei Erreichen einer bestimmten Position die Aktivierung der Verschlusseinrichtung von der geschlossenen in die freigebende Stellung ausgelöst wird,
   und/oder
bei freigebender Stellung der Verschlusseinrichtung einen Tiegel - durch Betätigung der Transfereinrichtung und/oder in Abhängigkeit von der Position der Transfereinrichtung und/oder der Position eines Endeffektors der Transfereinrichtung durch Betätigung einer von der Transfereinrichtung gesonderten Entnahmeeinrichtung, insbesondere Absenkeinrichtung - durch die Beschickungsöffnung aus der Kammer entnehmen, insbesondere absenken, zu lassen.

Durch die erfindungsgemäßen Maßnahmen wird der Entnahmevorgang automatisiert, wobei besonders die Schnelligkeit und Zuverlässigkeit des Entladens der Kammer (Reaktionskammer und/oder Sinterkammer) erhöht wird.

Die Verschlusseinrichtung kann in einer Variante direkt durch die Transfereinrichtung, insbesondere durch einen Endeffektor der Transfereinrichtung, betätigt werden (in diesem Fall könnte die Verschlusseinrichtung als solche passiv ausgebildet sein).

In einer anderen Variante ist die Verschlusseinrichtung selbst ist aktiv, d.h. umfasst zumindest einen eigenen (von der Transfereinrichtung gesonderten bzw. ofenseitigen) Aktuator, der die Betätigung bewirkt. Jedoch erfolgt auch in dieser Variante die Betätigung der Verschlusseinrichtung in Abhängigkeit von der Position der Transfereinrichtung und/oder der Position eines Endeffektors der Transfereinrichtung. Die Steuereinrichtung, die in dieser Variante mit dem Aktuator steuerungstechnisch verbunden ist, kennt die Position der Transfereinrichtung bzw. ihres Endeffektors (z.B. aus Sensordaten und/oder weil die Steuereinrichtung auch die Transfereinrichtung ansteuert) und steuert den zumindest einen Aktuator der Verschlusseinrichtung in Abhängigkeit dieser Position. Die Verschlusseinrichtung wird durch die Steuereinrichtung insbesondere dann in eine freigebende Stellung gebracht, wenn sich die Transfereinrichtung und/oder deren Endeffektor in einer Position befindet, in der sie für eine Aufnahme des Tiegels bzw. einen den Tiegel tragenden Träger bereit ist. Dies ist z.B. der Fall, wenn die Transfereinrichtung im Bereich der Beschickungsöffnung angekommen ist und/oder an die Kammer oder den Träger angedockt hat.

Ähnliches kann für die Entnahme des Tiegels durch die Beschickungsöffnung aus der Kammer gelten. Befindet sich die Verschlusseinrichtung in freigebender Stellung kann in einer Variante der Tiegel durch Betätigung der Transfereinrichtung aus der Kammer entnommen werden. In einer anderen Variante geschieht dies durch Betätigung einer von der Transfereinrichtung gesonderten Entnahmeeinrichtung, insbesondere Absenkeinrichtung, vorzugsweise ebenfalls in Abhängigkeit von der Position der Transfereinrichtung und/oder der Position eines Endeffektors der Transfereinrichtung. Z.B. könnte bei Annäherung der Transfereinrichtung in Richtung Ofen bzw. Kammer (z.B. ab einer bestimmten Position), die Entnahmeeinrichtung aktiviert werden, um den Tiegel aus der Kammer zu entnehmen. Alternativ könnte die Entnahmeeinrichtung auch unabhängig von der Transfereinrichtung zur Entnahme des Tiegels aktiviert werden.

Das Öffnen der Verschlusseinrichtung und/oder das Entnehmen des Tiegels aus der Kammer kann entweder durch die Transfereinrichtung selbst (hier ist die Transfereinrichtung der Betätiger) oder vorzugsweise in Abhängigkeit von der Position der Transfereinrichtung und/oder ihres Endeffektors (hier wirkt die Transfereinrichtung als Trigger für den Betätigungs- und/oder Entnahmevorgang) erfolgen.

Die Verschlusseinrichtung kann einen mechanischen Verrieglungsmechanismus und/oder Fixiermechanismus aufweisen und z.B. aus einem oder mehreren Hebeln, insbesondere einem Kniehebel, aufgebaut sein. Selbstverständlich können auch andere mechanische Verriegelungselemente (z.B. Schieber, Zapfen, od. dgl.) zur Anwendung kommen.

Das Auslösen der oben genannten Vorgänge (Verschlusseinrichtung, Entnahmeeinrichtung) kann z.B. dann erfolgen, wenn die Transfereinrichtung oder deren Endeffektor in eine Übernahmeposition gelangen (in der sie den Tiegel und/oder einen Tiegelträger übernehmen kann) oder wenn sich die Transfereinrichtung oder deren Endeffektor auf dem Weg zur Kammer befindet bzw. sich der Kammer nähern (Annäherungsposition). In beiden Fällen kann die Position der Transfereinrichtung oder deren Endeffektors ausschlaggebend sein. Unter dem Begriff Position wird weiters auch eine Stellung der Transfereinrichtung oder deren Endeffektors und eine allfällige Kontaktierungsposition (Andocken im Bereich der Beschickungsöffnung der Kammer) verstanden.

Die Position der Transfereinrichtung und/oder ihres Endeffektors kann mit einem oder mehreren Sensoren, z.B. einem Annäherungssensor und/oder einem Berührungssensor und/oder einem Bilderfassungssensor (Kamera), erfasst werden. Die Sensordaten können von der Steuereinrichtung ausgewertet werden und die Steuereinrichtung generiert daraufhin Steuersignale für die Verschlusseinrichtung und/oder eine Entnahmeeinrichtung.

Das Entnehmen kann je nach Ausgestaltung des Ofens und der Beschickungsöffnung z.B. durch ein Absenken und/oder jede beliebige andere Bewegung bewerkstelligt werden. Bevorzugt ist, wenn die Kammer zylinderförmig ist und der Tiegel bzw. Tiegelträger entlang der Zylinderachse in bzw. aus der Kammer bewegt werden.

Im Falle einer von der Transfereinrichtung gesonderten Entnahmeeinrichtung kann es sich z.B. um eine Absenkeinrichtung handeln (z.B. eine absenkbare Plattform, welche den Tiegel und/oder einen Tiegelträger auf ein tieferes Niveau (unterhalb der Kammer absenkt). Die Entnahmebewegung kann durch einen Antrieb der Entnahmeeinrichtung, z.B. durch einen Motor und/oder einen Zylinder, bewerkstelligt werden.

Die erfindungsgemäße Industrieofenanlage ist für sämtliche Arten der Behandlung von in einem Tiegel bereitgestellten (Ausgangs-)Materialien geeignet. So kann es sich bei dem Ofen z.B. um einen Reaktionsofen oder einen Sinterofen handeln. Auch Reaktionssintern, bei dem ein Sintervorgang mit einer chemischen Reaktion überlagert ist, wäre in einem erfindungsgemäßen Industrieofen denkbar. Es handelt sich - insbesondere bei der Durchführung von Reaktionsvorgängen - um einen Industrieofen, bei dem in der Kammer Temperaturen von über 1000°C, insbesondere auch über 2000°C oder mehr entstehen können. Es handelt sich somit insbesondere um Hochtemperaturöfen.

Die Ausgangsmaterialien wiederum können von jeglicher Beschaffenheit sein, umfassend pulverförmiges, körniges und/oder festes Material. Bevorzugte Anwendungsbeispiele sind z.B. die Herstellung von Siliziumkarbid aus Siliziumoxid und Kohlenstoff, die Herstellung von Borkarbid aus Boroxid und Kohlenstoff, grundsätzlich die Herstellung verschiedener anderer Karbide, Nitride, Boride, usw.. Beispiele für Reaktionssintern wäre z.B. die Herstellung von Spinell aus Magnesiumoxid uns Aluminiumoxid, die Herstellung von Aluminiumtitanat aus Aluminiumoxid und Titanoxid, die Herstellung von Fluorapatit aus Fluorit und Tricalciumphosphat, und viele mehr. Schließlich eignet sich der erfindungsgemäße Industrieofenanlage auch zum Sintern bzw. Wärmebehandlung verschiedener Zwischenprodukte. Die grundlegenden chemischen Reaktionen sind dem Fachmann bekannt. Lediglich als Beispiel wird daher auf die EP0000661A1 verwiesen, welche die Reaktion zu Siliziumcarbid beschreibt.

Der Begriff Tiegel ist breit zu verstehen und umfasst Behältnisse, die geeignet sind, Ausgangsmaterialien aufzunehmen. Während der Behandlung im Ofen befindet sich das/die Ausgangsmaterial(ien) bzw. das/die entstehende(n) End- oder Zwischenprodukt(e) im Tiegel. Die Form und/oder das Material des Tiegels unterliegt keinen Beschränkungen und kann je nach Anwendung variieren. So kann der Tiegel z.B. zylinderförmig oder topfförmig oder schalenförmig oder kistenförmig, usw. ausgebildet sein. Der Tiegel kann offen oder verschließbar sein. Ebenso kann er Öffnungen (z.B. Schlitze, Löcher, usw.) aufweisen, um eine Evakuierung und/oder Beaufschlagung des Tiegelinneren mit Prozessgas (z.B. inerte Atmosphäre) zu ermöglichen. Das Material des Tiegels wird so gewählt, dass es den Temperaturen, die für eine spezielle Anwendung in der (Reaktions-)Kammer erreicht werden, standhält.

Im Falle einer Induktionsheizung ist der Tiegel vorzugsweise aus elektrisch leitfähigem Material, wie z.B. Graphit, gebildet. Die von einer Induktionsspule ausgehende elektromagnetische Energie wird durch das Material des Tiegels in Wärme, die an das im Tiegel befindliche material übertragen wird, umgewandelt.

Unter Belade-, Entlade- bzw. Übergabestationen sind Stationen der Industrieofenanlage gemeint, in denen der Tiegel mit Ausgangsmaterial befüllt wird oder entladen wird (z.B. bei pulverförmigem Gut vorzugsweise durch Absaugen) oder an einen Zwischenspeicher oder eine weiterführende Transporteinrichtung (z.B. Shuttles, Fließband, od. dgl.) übergeben wird.

Selbstverständlich kann der Ofen auch eine Kühleinrichtung zum Kühlen bestimmter Komponenten, insbesondere einer äußeren Umhüllung der Kammer, mit einem Kühlmedium, insbesondere Wasser, aufweisen.

Eine bevorzugte Ausführungsform zeichnet sich dadurch aus, dass die Verschlusseinrichtung zumindest einen - vorzugsweise pneumatischen oder hydraulischen - Aktuator, der durch die Steuereinrichtung betätigbar ist, aufweist. In dieser Ausführungsform ist die Verschlusseinrichtung selbst aktiv und wird von der Steuereinrichtung ansteuert, um von der geschlossenen Stellung in die freigebende Stellung zu gelangen und vice versa. Die Transfereinrichtung dient in diesem Fall als Trigger, derart, dass bei Erreichen einer bestimmten Position (relativ zur Kammer bzw. Beschickungsöffnung) die Aktivierung der Verschlusseinrichtung von der geschlossenen in die freigeben der Stellung ausgelöst wird.

Eine bevorzugte Ausführungsform zeichnet sich dadurch aus, dass die Verschlusseinrichtung in der geschlossenen Stellung und/oder in der freigebenden Stellung selbstarretiert ist. Die einzelnen Stellungen zeichnen sich durch hohe Zuverlässigkeit aus, d.h. ein unbeabsichtigtes Überspringen von einer Stellung in die andere wird effektiv vermieden. Die Selbstarretierung kann dabei derart verwirklicht sein, das zwei stabile Zustände (geschlossene Stellung einerseits und freigebende Stellung andererseits) durch Überwindung eines (Betätigungs-)Widerstandes ineinander übergeführt werden können.

Eine bevorzugte Ausführungsform zeichnet sich dadurch aus, dass die Verschlusseinrichtung zumindest einen Kniehebelmechanismus aufweist, der durch den zumindest einen Aktuator betätigbar ist.

Eine bevorzugte Ausführungsform zeichnet sich dadurch aus, dass die Steuereinrichtung dazu eingerichtet ist, zur Entnahme eines Tiegels aus der Kammer die Verschlusseinrichtung durch Betätigung des zumindest einen Aktuators in die freigebende Stellung zu bringen, wenn ein Endeffektor der Transfereinrichtung vor und/oder unterhalb der Beschickungsöffnung angeordnet ist und/oder wenn ein Endeffektor der Transfereinrichtung den Ofen im Bereich der Beschickungsöffnung kontaktiert und/oder wenn ein Endeffektor der Transfereinrichtung einen - sich in der Kammer befindlichen Tiegel tragenden - Träger von außen kontaktiert. Die Transfereinrichtung dient als Trigger für das Auslösen des Öffnens bzw. Freigebens der Kammer bzw. des darin befindlichen Tiegels. Dadurch wird die freigebende Stellung der Versschlusseinrichtung erst angenommen, wenn sich die Transfereinrichtung in einer Position befindet, in der sie bereit ist, den Tiegel oder einen Tiegelträger aufzunehmen und/oder in weiterer Folge zu handhaben.

Eine bevorzugte Ausführungsform zeichnet sich dadurch aus, dass der Ofen zumindest einen Sensor, vorzugsweise einen Berührungssensor und/oder Annäherungssensor, zur Detektion der Position der Transfereinrichtung und/oder der Position eines Endeffektors der Transfereinrichtung aufweist, wobei vorzugsweise der Sensor im Bereich der Beschickungsöffnung angeordnet ist. Durch diese Maßnahme wird die Zuverlässigkeit weiter erhöht, weil sichergestellt ist, dass die Position auch detektiert wird. Die Detektion der Position durch einen Sensor kann zusätzlich zu einer Übertragung und/oder Registrierung von Bewegungsdaten der Transfereinrichtung (an oder durch die Steuereinrichtung) erfolgen. Die Prozesssicherheit wird dadurch stark erhöht.

Eine bevorzugte Ausführungsform zeichnet sich dadurch aus, dass die Steuereinrichtung dazu eingerichtet ist, Daten über die Position der Transfereinrichtung und/oder die Position eines Endeffektors der Transfereinrichtung von einem Sensor und/oder von der Transfereinrichtung selbst zu empfangen, und/oder dass die Steuereinrichtung dazu eingerichtet ist, Daten von einem Temperatursensor des Ofens zu empfangen und in Abhängigkeit der Daten des Temperatursensors die Transfereinrichtung und/oder die Verschlusseinrichtung anzusteuern. Diese Ausführungsformen sind bevorzugt, weil die Steuereinrichtung zuverlässige Positionsdaten erhält, in deren Abhängigkeit sie die Verschlusseinrichtung und/oder eine (von der Transfereinrichtung gesonderte) Entnahmeeinrichtung ansteuert.

Eine bevorzugte Ausführungsform zeichnet sich dadurch aus, dass der Ofen einen - vorzugsweise sockelartigen - Träger zum Tragen eines in der Kammer befindlichen Tiegels aufweist, wobei der Träger in seiner Betriebsposition die Beschickungsöffnung (vorzugsweise luftdicht) verschließt und durch die Verschlusseinrichtung fixiert ist und wobei der Träger bei freigebender Stellung der Verschlusseinrichtung aus seiner Betriebsposition von der Kammer - vorzugsweise durch die Transfereinrichtung - entnehmbar, insbesondere absenkbar, ist. Der Träger dient einerseits zum Tragen des Tiegels, sodass beim Entnahmevorgang nicht der (möglicherweise noch zu heiße) Tiegel selbst kontaktiert werden muss, und andererseits zum Verschließen der Beschickungsöffnung. Der Träger bildet somit gleichzeitig den Verschluss der Kammer. Dadurch, dass der Träger diese beiden Funktionen aufweist, sind die Schritte zur Handhabung des Tiegels im Zuge der Entnahme besonders einfach.

Eine bevorzugte Ausführungsform zeichnet sich dadurch aus, dass ein Endeffektor der Transfereinrichtung ausgebildet ist, den Träger im Bereich seiner Unterseite aufzunehmen und/oder einen auf dem Träger befindlichen Tiegel aufzunehmen, vorzugsweise mittels eines Greifers. Der Endeffektor kann z.B. ein (Parallel-)Greifer sein, der entweder den Träger und/oder den Tiegel selbst greifen und in weiterer Folge an eine andere Stelle bewegen kann.

Eine bevorzugte Ausführungsform zeichnet sich dadurch aus, dass der Träger in seiner Betriebsposition in das Innere der Kammer ragt. Auf diese Weise dient er auch der Positionierung des Tiegels innerhalb der Kammer, sodass sich der Tiegel auf der richtigen Stelle in Bezug zur Heizeinrichtung (z.B. Induktionsheizung) befindet.

Eine bevorzugte Ausführungsform zeichnet sich dadurch aus, dass der Träger an seiner Unterseite durch eine Bodenplatte abgeschlossen ist. Die Bodenplatte dient als Verschluss der Beschickungsöffnung und wird durch die Verschlusseinrichtung gegen den Rand der Beschickungsöffnung gedrückt.

Eine bevorzugte Ausführungsform zeichnet sich dadurch aus, dass der Träger an seiner Unterseite nach unten ragende Füße aufweist. Diese Füße haben den Zweck, dass beim Abstellen des Trägers durch die Transfereinrichtung (auf dem Boden oder auf einer Zwischenplattform) der Endeffektor (ähnlich der Gabel eines Gabelstaplers) problemlos unter dem Träger herausbewegt werden kann.

Eine bevorzugte Ausführungsform zeichnet sich dadurch aus, dass in oder an dem Träger zumindest ein Temperatursensor, vorzugsweise in Form eines Thermoelements, zur Messung einer Temperatur in der Kammer angeordnet ist. Dieser Temperatursensor kann mit der Steuereinrichtung verbunden sein, sodass dessen Temperaturdaten ebenfalls zur Steuerung der Verschlusseinrichtung und/oder der Transfereinrichtung verwendet werden können.

Durch die weiteren Ausführungsformen des Trägers werden diese weitere Funktionen übertragen: Eine bevorzugte Ausführungsform zeichnet sich dadurch aus, dass der Träger zumindest ein Wärmeschild, welches in einem Hohlraum des Trägers angeordnet ist, aufweist. Eine bevorzugte Ausführungsform zeichnet sich dadurch aus, dass in dem Träger zumindest ein Hohlraum, vorzugsweise in Form eines Kanals oder einer Wassertasche, zum Aufnehmen und/oder zur Durchführung eines Kühlmittels ausgebildet ist. Eine bevorzugte Ausführungsform zeichnet sich dadurch aus, dass in dem Träger eine Durchführung für eine Gasleitung und/oder Vakuumleitung und/oder elektrische Leitung und/oder ein Thermoelement ausgebildet ist.

Eine bevorzugte Ausführungsform zeichnet sich dadurch aus, dass die Industrieofenanlage zumindest zwei, zu einer Einheit zusammengefasste und durch die Steuereinrichtung steuerbare Öfen aufweist, und dass die Steuereinrichtung eingerichtet ist, einen Ofen der Einheit durch Ansteuerung der Transfereinrichtung und/oder Ansteuerung der Verschlusseinrichtung zu entladen und/oder zu reinigen und/oder neu zu beschicken, während sich ein anderer Ofen der Einheit im Produktionsmodus befindet. Dadurch können die Taktzeiten reduziert und Leerläufer vermieden werden.

Eine bevorzugte Ausführungsform zeichnet sich dadurch aus, dass die Industrieofenanlage zumindest zwei, zu einer Einheit zusammengefasste und durch die Steuereinrichtung steuerbare Öfen aufweist, wobei die Einheit eine gemeinsame - vorzugsweise elektrische - Versorgungseinrichtung, vorzugsweise in Form eines Induktionsgenerators, für die - vorzugsweise in Form von Induktionsspulen ausgebildeten - Heizeinrichtungen aufweist, welche Versorgungseinrichtung zwischen den Heizeinrichtungen der Öfen umschaltbar ist, und/oder die Einheit eine gemeinsame, zwischen den Kammern umschaltbare Pumpen- und/oder Gasbeschickungseinrichtung aufweist. Der Konstruktionsaufwand wird dadurch verringert, da bestimmte Komponenten nur einmal verbaut werden müssen.

Eine bevorzugte Ausführungsform zeichnet sich dadurch aus, dass die Transfereinrichtung auf einer Führungsbahn geführt ist und/oder dass die Transfereinrichtung zumindest einen Roboterarm umfasst und/oder dass ein Endeffektor der Transfereinrichtung einen Greifer, vorzugsweise einen Parallelgreifer, umfasst und/oder dass ein Endeffektor der Transfereinrichtung eine Reinigungseinrichtung umfasst und/oder trägt, wobei vorzugsweise die Reinigungseinrichtung eine - vorzugsweise (durch einen Antrieb) in Rotation versetzbare - Bürste und/oder eine Absaugeinrichtung und/oder eine Druckluftzufuhr und/oder eine Abdeckung, durch welche die Beschickungsöffnung verschließbar ist, umfasst. Die Transfereinrichtung erlangt dadurch eine weitere Funktion, nämlich die Reinigung der Kammer nach einem Reaktions- bzw. Behandlungsprozess. Dadurch wird die Automatisierung weiter erhöht und ist es im Betrieb nicht mehr erforderlich, dass Bedienpersonen im Bereich der Öfen bzw. deren Beschickungsöffnung hantieren müssen. Das Gefahrenpotential für Personen wird dadurch erheblich reduziert.

Das Ziel wird auch erreicht mit einem Verfahren zum Betreiben einer Industrieofenanlage, insbesondere zur Herstellung von keramischen Werkstoffen und/oder Karbiden, insbesondere Siliziumkarbid, wobei die Industrieofenanlage
- zumindest einen Ofen, insbesondere Reaktionsofen, mit einer - vorzugsweise evakuierbaren und/oder mit inerter Atmosphäre beaufschlagbaren - Kammer, insbesondere Reaktionskammer, die eine, vorzugsweise an ihrer Unterseite angeordnete, Beschickungsöffnung zum Beschicken der Kammer mit einem mit - vorzugsweise pulverförmigem - Ausgangsmaterial befüllten Tiegel aufweist, einer Heizeinrichtung, vorzugsweise in Form einer Induktionsspule und/oder Induktionsheizung, zum Erwärmen eines in die Kammer eingebrachten Ausgangsmaterials und einer Verschlusseinrichtung für die Beschickungsöffnung, welche Verschlusseinrichtung zwischen einer geschlossenen Stellung und einer freigebenden Stellung betätigbar ist,
- eine Steuereinrichtung zum Steuern des zumindest einen Ofens und
- eine Transfereinrichtung, vorzugsweise in Form eines Roboters, zum Transferieren eines durch die Beschickungsöffnung in die Kammer einbringbaren Tiegels zu dem und/oder von dem Ofen, vorzugsweise zwischen dem Ofen und einer Belade- und/oder Entladestation zum Be- und/oder Entladen eines Tiegels oder einer Übergabestation,

wobei zur Entnahme eines Tiegels aus der Kammer
die Verschlusseinrichtung - in Abhängigkeit von der Position der Transfereinrichtung und/oder der Position eines Endeffektors der Transfereinrichtung - in die freigebende Stellung gebracht wird, dass die Verschlusseinrichtung zumindest einen eigenen, von der Transfereinrichtung gesonderten Aktuator, der die Betätigung zwischen der geschlossenen Stellung und der freigebenden Stellung bewirkt, umfasst und wobei die Transfereinrichtung als Trigger dient, derart, dass bei Erreichen einer bestimmten Position die Aktivierung der Verschlusseinrichtung von der geschlossenen in die freigebende Stellung ausgelöst wird,
   und/oder
bei freigebender Stellung der Verschlusseinrichtung ein Tiegel - durch Betätigung der Transfereinrichtung und/oder vorzugsweise in Abhängigkeit von der Position der Transfereinrichtung und/oder der Position eines Endeffektors der Transfereinrichtung durch Betätigung einer von der Transfereinrichtung gesonderten Entnahmeeinrichtung, insbesondere Absenkeinrichtung - durch die Beschickungsöffnung aus der Kammer entnommen, insbesondere abgesenkt, wird.

Die Vorteile und Weiterbildungen der oben beschriebenen Ausführungsformen gelten gleichermaßen auch für die nachfolgenden Ausführungsformen des erfindungsgemäßen Verfahrens und sind daher auch auf diese übertragbar.

Eine bevorzugte Ausführungsform des Verfahrens zeichnet sich dadurch aus, dass die Industrieofenanlage gemäß der Erfindung bzw. einer der oben beschriebenen Ausführungsformen ausgebildet ist.

Eine bevorzugte Ausführungsform zeichnet sich dadurch aus, dass nach dem Verbringen des Tiegels aus der Kammer die Kammer mittels der Transfereinrichtung gereinigt wird, wobei vorzugsweise ein Endeffektor der Transfereinrichtung eine Reinigungseinrichtung umfasst und/oder während der Reinigung eine Reinigungseinrichtung trägt, wobei vorzugsweise die Reinigungseinrichtung eine Bürste und/oder einen Sauger und/oder eine Druckluftzufuhr umfasst.

Eine bevorzugte Ausführungsform zeichnet sich dadurch aus, dass die Industrieofenanlage zumindest zwei, zu einer Einheit zusammengefasste und durch die Steuereinrichtung steuerbare Öfen aufweist und dass ein Ofen der Einheit durch Ansteuerung der Transfereinrichtung und/oder Ansteuerung der Verschlusseinrichtung entladen und/oder gereinigt und/oder neu beschickt wird, während sich ein anderer Ofen der Einheit im Produktionsmodus befindet.

Eine bevorzugte Ausführungsform zeichnet sich dadurch aus, dass die Industrieofenanlage eine Vielzahl von Öfen aufweist, wobei vorzugsweise jeweils zwei Öfen zu einer Einheit zusammengefasst sind, und dass die Öfen durch dieselbe Transfereinrichtung entladen und/oder gereinigt und/oder beschickt werden, wobei die Öfen jeweils zeitversetzt zueinander, vorzugsweise durch Evakuierung der Kammer und/oder durch Einbringen einer inerten Atmosphäre und/oder durch Aktivierung der Heizeinrichtung, in den Produktionsmodus gebracht werden.

Eine bevorzugte Ausführungsform zeichnet sich dadurch aus, dass zur Entnahme eines Tiegels aus der Kammer die Transfereinrichtung mit einem Endeffektor an die Beschickungsöffnung heranfährt und die Verschlusseinrichtung - durch die Transfereinrichtung und/oder zumindest einen Aktuator der Verschlusseinrichtung - in eine freigebende Stellung gebracht wird.

Eine bevorzugte Ausführungsform zeichnet sich dadurch aus, dass die Transfereinrichtung den Tiegel aus der Kammer entnimmt, insbesondere absenkt.

Eine bevorzugte Ausführungsform zeichnet sich dadurch aus, dass der Ofen einen - vorzugsweise sockelartigen - Träger zum Tragen eines in der Kammer befindlichen Tiegels aufweist, wobei der Träger in seiner Betriebsposition die Beschickungsöffnung verschließt und durch die Verschlusseinrichtung fixiert ist und wobei die Transfereinrichtung den Tiegel aus der Kammer entnimmt, indem die Transfereinrichtung den Träger zusammen mit dem Tiegel aus seiner Betriebsposition von der Kammer entnimmt, insbesondere absenkt.

Eine bevorzugte Ausführungsform zeichnet sich dadurch aus, dass ein Endeffektor der Transfereinrichtung den Tiegel von dem entnommenen, insbesondere abgesenkten, Träger entnimmt, wobei vorzugsweise die Transfereinrichtung den entnommenen Träger zu einer Belade- und/oder Entladestation zum Be- und/oder Entladen des Tiegels oder einer Übergabestation transferiert.

Das Ziel wird auch erreicht mit einem Verfahren zur Herstellung von keramischen Werkstoffen und/oder Karbiden, insbesondere zur Herstellung von Siliziumkarbid aus Siliziumoxid und Kohlenstoff, durch exotherme Reaktion und/oder zum Sintern von Werkstoffen, wobei vorzugsweise pulverförmige Ausgangsmaterialien, insbesondere ein Oxid und Kohlenstoff, in einen Tiegel gefüllt werden, wobei der befüllte Tiegel in einen Ofen einer Industrieofenanlage verbracht wird, wobei die Industrieofenanlage gemäß der Erfindung bzw. einer der oben beschriebenen Ausführungsformen ausgebildet ist und/oder dass die Industrieofenanlage gemäß einem Verfahren gemäß der Erfindung bzw. einer der oben beschriebenen Ausführungsformen betrieben wird.

Zum besseren Verständnis der Erfindung wird diese anhand der nachfolgenden Figuren näher erläutert.

Es zeigen jeweils in stark vereinfachter, schematischer Darstellung:
- Fig. 1: eine Ausführungsform einer Industrieofenanlage von oben;
- Fig. 2: zwei Öfen einer Einheit der Industrieofenanlage in aufgeschnittener Darstellung;
- Fig. 3: zwei Öfen einer Einheit, wobei bei einem Ofen der Tiegel und der Tiegelträger abgesenkt sind;
- Fig. 4: die Unterseite einer Kammer im Detail;

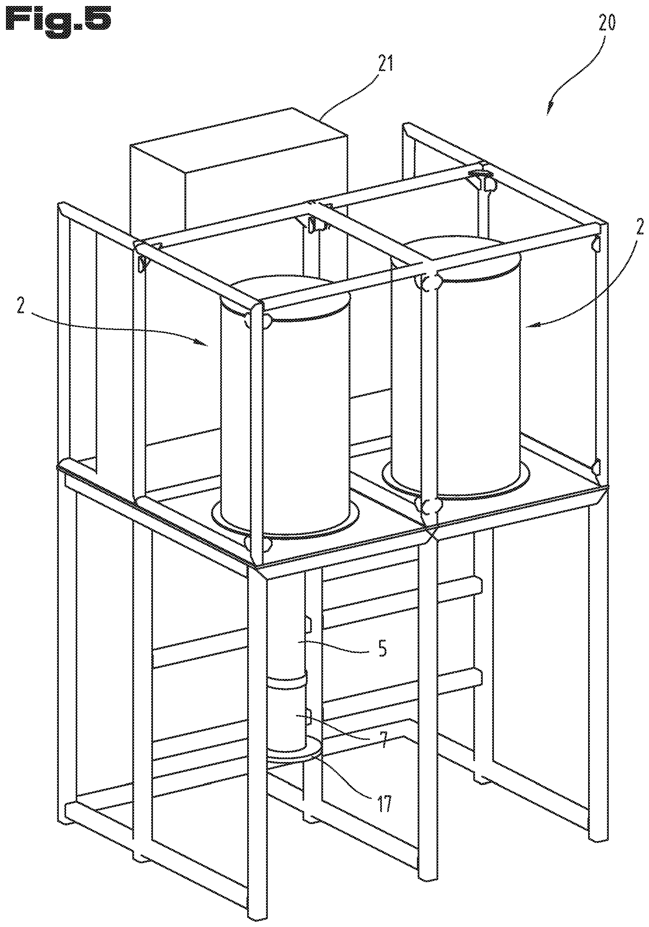

- Fig. 5: zwei Öfen einer Einheit der Industrieofenanlage in perspektivischer Darstellung;
- Fig. 6: die Transfereinrichtung mit Endeffektor in einer Übernahmeposition relativ zur Kammer;
- Fig. 7: die Transfereinrichtung mit Endeffektor in einer abgesenkten Position;
- Fig. 8: die Transfereinrichtung mit Endeffektor in einer den Tiegel greifenden Stellung;
- Fig. 9: die Steuereinrichtung sowie die mit der Steuereinrichtung verbundenen Komponenten;
- Fig. 10: die Transfereinrichtung mit einer Reinigungseinrichtung bei der Reinigung der Kammer;
- Fig. 11: eine Ausführungsform mit von der Transfereinrichtung gesonderter Entnahmeeinrichtung (hier Absenkeinrichtung) ;
- Fig. 12: eine Ausführungsform, bei der die Transfereinrichtung die Verschlusseinrichtung betätigt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

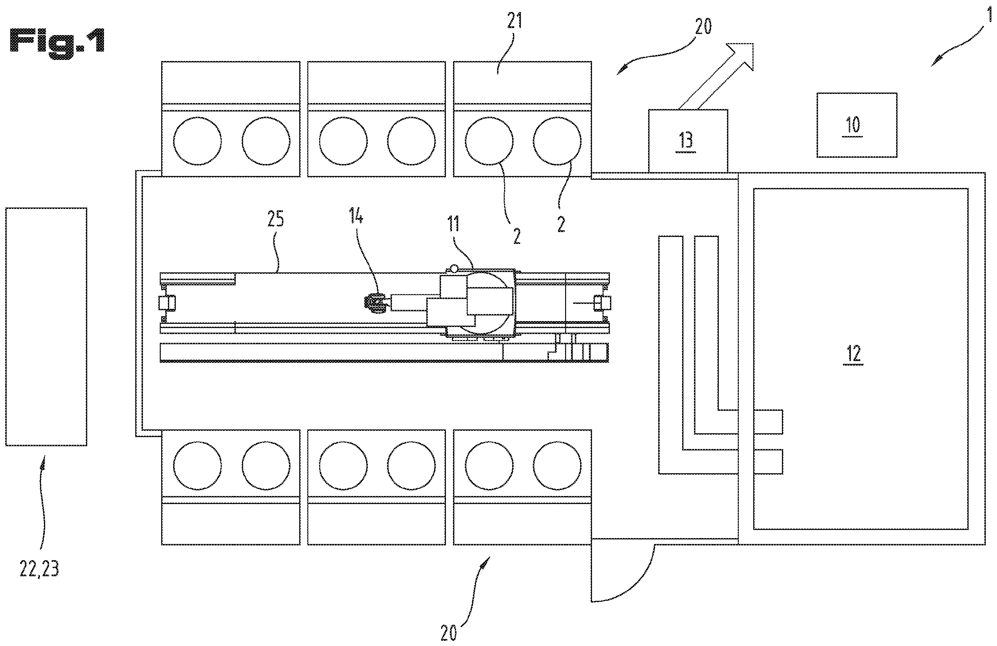

Fig. 1 zeigt eine Ausführungsform einer Industrieofenanlage 1 von oben. Eine solche kann insbesondere zur Herstellung von keramischen Werkstoffen und/oder Karbiden, insbesondere Siliziumkarbid, verwendet werden, eignet sich aber grundsätzlich für jegliche Art von Reaktions- und/oder Sintervorgängen.

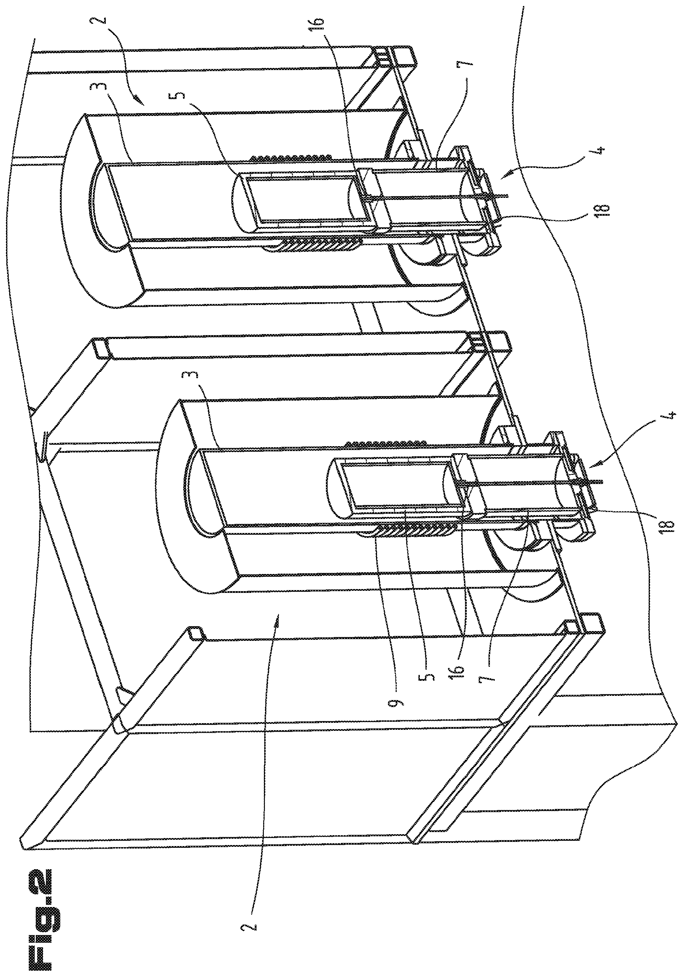

Wie aus den Fig. 2-4 zu sehen umfasst ein Ofen 2, insbesondere Reaktionsofen, der Industrieofenanlage 1 eine - vorzugsweise evakuierbare und/oder mit inerter Atmosphäre beaufschlagbare - Kammer 3, insbesondere Reaktionskammer, die eine (in der dargestellten Ausführungsform an ihrer Unterseite angeordnete) Beschickungsöffnung 4 zum Beschicken der Kammer 3 mit einem befüllten Tiegel 5 aufweist. Eine Heizeinrichtung 9, vorzugsweise in Form einer Induktionsheizung, dient zum Erwärmen eines in die Kammer 3 eingebrachten Ausgangsmaterials. Der Ofen 2 weist auch eine Verschlusseinrichtung 6 für die Beschickungsöffnung 4 auf. Die Verschlusseinrichtung 6 ist zwischen einer geschlossenen Stellung und einer freigebenden Stellung betätigbar. Eine Steuereinrichtung 10 steuert den Ofens 2 bzw. seine Komponenten.

Die Industrieofenanlage 1 weist weiters eine Transfereinrichtung 11, vorzugsweise in Form eines Roboters, auf zum Transferieren eines durch die Beschickungsöffnung 4 in die Kammer 3 einbringbaren Tiegels 5 zu dem und/oder von dem Ofen 2. Der Transfer erfolgt vorzugsweise zwischen dem Ofen 2 und einer Belade- und/oder Entladestation 12 zum Be- und/oder Entladen eines Tiegels 5 oder einer Übergabestation 13 zum Zwischenlagern und/oder Weitertransport (Fig. 1).

Die Steuereinrichtung 10 ist dazu eingerichtet ist, zur Entnahme eines Tiegels 5 aus der Kammer 3 die Verschlusseinrichtung 6 in die freigebende Stellung zu bringen.

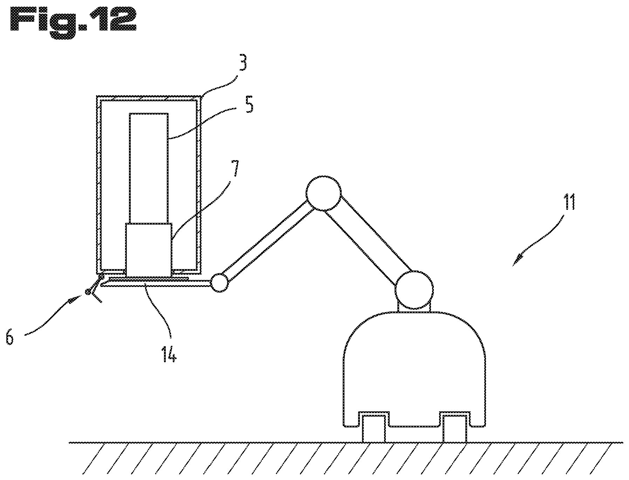

Dies kann dadurch erfolgen, dass die Steuereinrichtung die Transfereinrichtung 11 derart ansteuert, dass die Transfereinrichtung 11 die Verschlusseinrichtung betätigt (also die Verschlusseinrichtung von der geschlossenen Stellung in die freigebende Stellung bringt). Z.B. kann in dieser Ausführungsform eine Endeffektor an die Verschlusseinrichtung 6 andocken bzw. diese in die freigebende Stellung bewegen. Mit anderen Worten: die Transfereinrichtung wirkt hier als Betätiger einer (passiven, d.h. selbst nicht aktiven) Verschlusseinrichtung. Eine solche Variante ist in Fig. 12 schematisch dargestellt.

Dis kann aber auch dadurch erfolgen, dass die Steuereinrichtung die Verschlusseinrichtung ansteuert und zwar in Abhängigkeit von der Position der Transfereinrichtung 11 und/oder der Position eines Endeffektors 14 der Transfereinrichtung. Die Transfereinrichtung bzw. deren Position wirkt hier lediglich als Trigger. Die Verschlusseinrichtung weist zumindest einen eigenen Aktuator, der von der Steuereinrichtung (z.B. bei Erreichen einer bestimmten Position der Transfereinrichtung) angesteuert wird, sodass die Verschlusseinrichtung aus der geschlossenen in die freigebende Stellung gelangt.

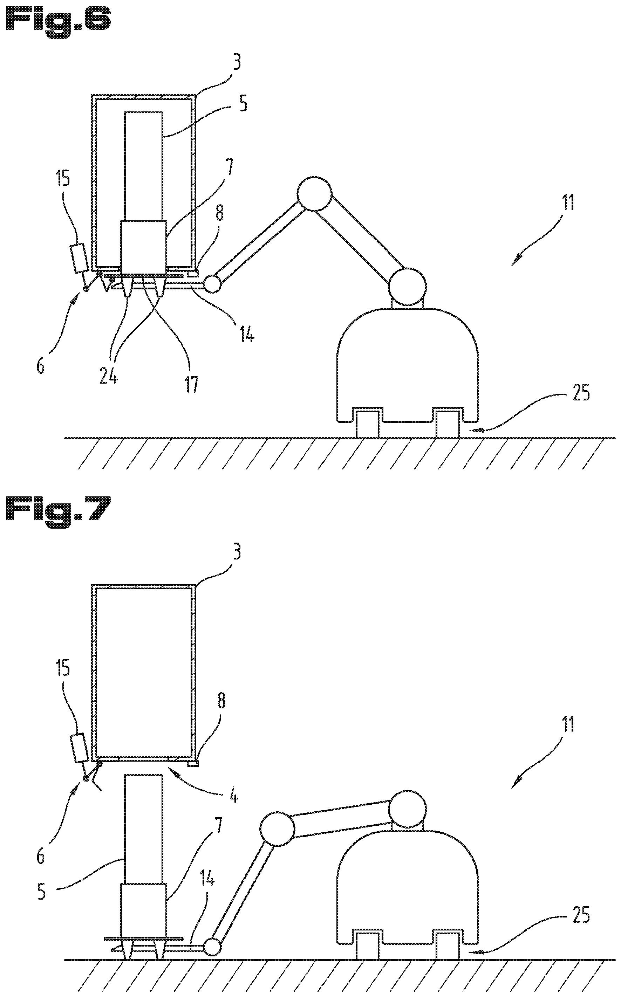

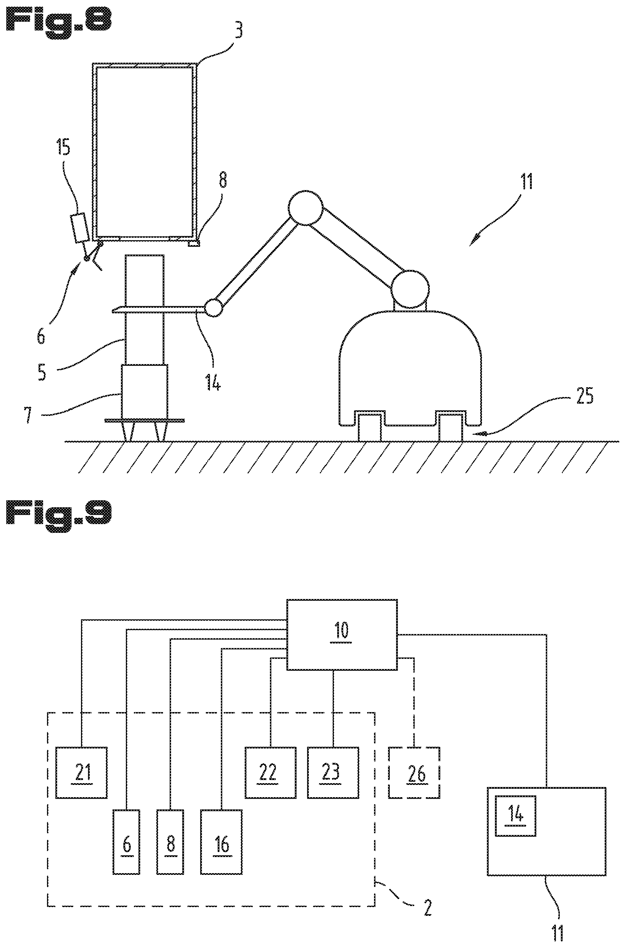

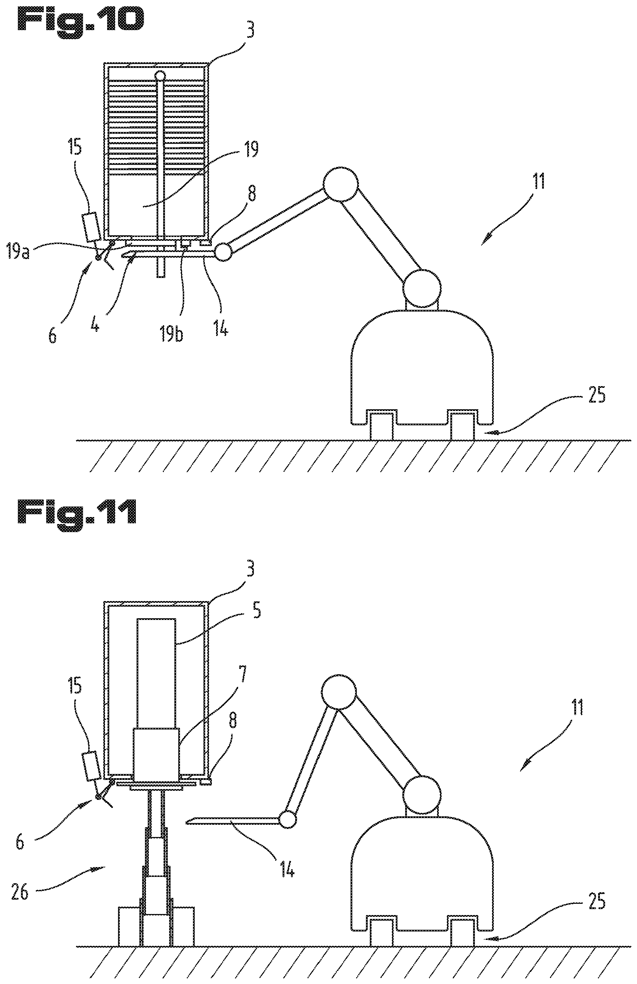

Ist die Verschlusseinrichtung nun freigebender Stellung erfolgt die Entnahme des Tiegels 5 durch die Beschickungsöffnung 4 aus der Kammer 3 nach ähnlichem Prinzip: entweder durch Betätigung der Transfereinrichtung 11 (siehe den Übergang von Fig. 6 zu Fig. 7) und/oder vorzugsweise in Abhängigkeit von der Position der Transfereinrichtung 11 und/oder der Position eines Endeffektors 14 der Transfereinrichtung 11 durch Betätigung einer von der Transfereinrichtung 11 gesonderten Entnahmeeinrichtung 26, insbesondere Absenkeinrichtung (siehe Fig. 11). Die Entnahmeeinrichtung 26 kann ebenfalls mit der Steuereinrichtung 10 kommunikationsverbunden und durch letztere ansteuerbar sein (Fig. 9).

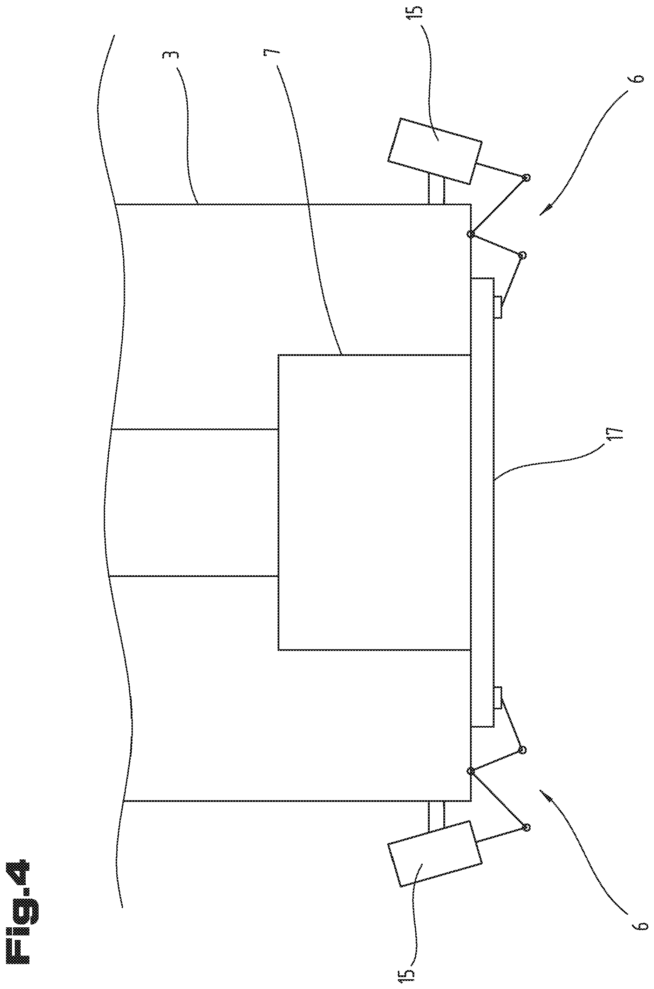

Aus den Fig. 4, 6-7 und 9 ist ersichtlich, dass die Verschlusseinrichtung 6 zumindest einen - vorzugsweise pneumatischen oder hydraulischen - Aktuator 15, der durch die Steuereinrichtung 10 betätigbar ist, aufweisen kann. Die Steuereinrichtung 10 kann dann dazu eingerichtet ist, zur Entnahme eines Tiegels 5 aus der Kammer 3 die Verschlusseinrichtung 6 durch Betätigung des zumindest einen Aktuators 15 in die freigebende Stellung zu bringen, wenn ein Endeffektor 14 der Transfereinrichtung 11 vor und/oder unterhalb der Beschickungsöffnung 4 angeordnet ist und/oder wenn ein Endeffektor 14 der Transfereinrichtung (11) den Ofen 2 im Bereich der Beschickungsöffnung 4 kontaktiert und/oder wenn ein Endeffektor 14 der Transfereinrichtung 11 einen - sich in der Kammer 3 befindlichen Tiegel 5 tragenden - Träger 7 von außen kontaktiert (Fig. 6).

Wie aus den Fig. 6-11 ersichtlich kann der Ofen 2 zumindest einen Sensor 8, vorzugsweise einen Berührungssensor und/oder Annäherungssensor, zur Detektion der Position der Transfereinrichtung 11 und/oder der Position eines Endeffektors 14 der Transfereinrichtung 11 aufweisen. Der Sensor 8 ist vorzugsweise im Bereich der Beschickungsöffnung 4 angeordnet ist.

Die Steuereinrichtung 10 kann nun dazu ausgelegt sein, Daten über die Position der Transfereinrichtung 11 und/oder die Position eines Endeffektors 14 der Transfereinrichtung 11 von einem Sensor 8 und/oder von der Transfereinrichtung 11 selbst zu empfangen. In Abhängigkeit dieser Sensordaten kann nun die Transfereinrichtung 11 und/oder die Verschlusseinrichtung 6 angesteuert werden.

Der Ofen 2 kann weiters einen Temperatursensor 16 aufweisen (siehe Fig. 2, 3 und 9). Die Steuereinrichtung 10 kann dazu ausgelegt sein, Daten von dem Temperatursensor 16 zu empfangen und in Abhängigkeit der Daten des Temperatursensors 16 die Transfereinrichtung 11 und/oder die Verschlusseinrichtung 6 anzusteuern. Z.B. kann die Steuerung ausgelegt sein, dass die Transfereinrichtung 11 erst dann zum Ofen 2 bewegt wird und/oder die Verschlusseinrichtung 6 erst dann in die freigebende Stellung gebracht wird, wenn die Temperatur in der Kammer unter einen kritischen Wert abgekühlt ist.

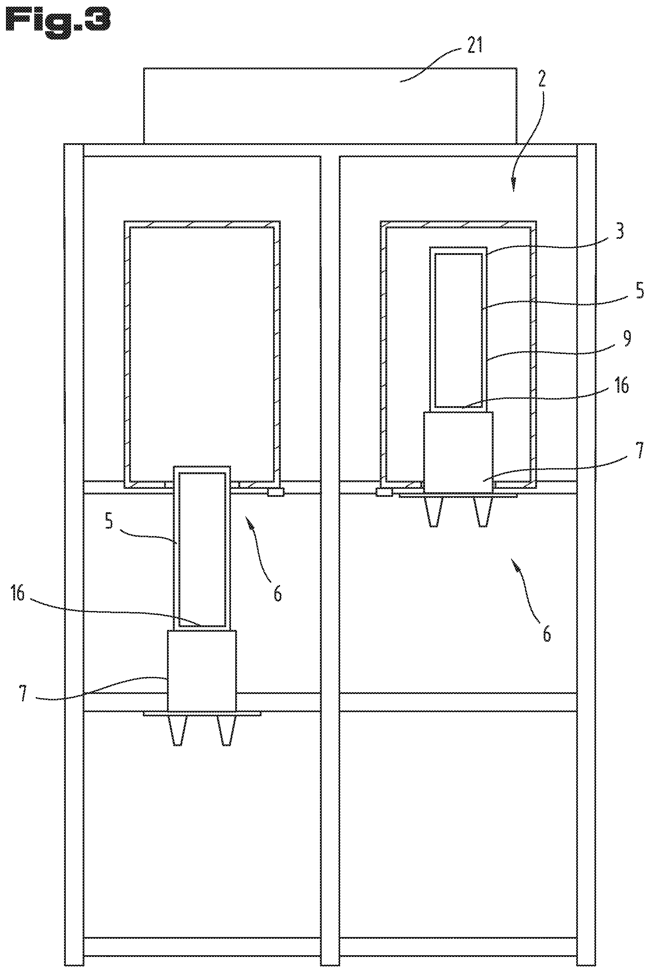

Wie aus den Figuren ersichtlich kann der Ofen 2 einen - vorzugsweise sockelartigen - Träger 7 zum Tragen eines in der Kammer 3 befindlichen Tiegels 5 aufweisen, wobei der Träger 7 in seiner Betriebsposition die Beschickungsöffnung (4) verschließt und durch die Verschlusseinrichtung (6) fixiert ist (siehe rechter Ofen in Fig 3) und wobei der Träger 7 bei freigebender Stellung der Verschlusseinrichtung 6 aus seiner Betriebsposition von der Kammer 3 - vorzugsweise durch die Transfereinrichtung 11 - entnehmbar, insbesondere absenkbar, ist (siehe linker Ofen in Fig. 3). Ein Endeffektor 14 der Transfereinrichtung 11 kann ausgebildet sein, den Träger 7 im Bereich seiner Unterseite aufzunehmen (siehe Fig. 6) und/oder einen auf dem Träger 7 befindlichen Tiegel 5 aufzunehmen, vorzugsweise mittels eines Greifers (siehe Fig. 8).

Der Träger 7 kann in seiner Betriebsposition in das Innere der Kammer 3 ragen (siehe Fig. 2, 3und 6). Weiters kann der Träger 7 an seiner Unterseite durch eine Bodenplatte 17 abgeschlossen sein (siehe Fig. 4 und 6). Die Bodenplatte 17 dichtet in der Betriebsposition die Kammer 3 ab und liegt an dem Rand der Beschickungsöffnung 4 an. Wie bereits erwähnt kann in oder an dem Träger 7 zumindest ein Temperatursensor 16, vorzugsweise in Form eines Thermoelements, zur Messung einer Temperatur in der Kammer 3 angeordnet sein (Fig. 2 und 3). Der Träger 7 könnte auch zumindest ein Wärmeschild, welches in einem Hohlraum des Trägers (7) angeordnet ist, aufweisen (nicht dargestellt). In Fig. 2 ist angedeutet, dass in dem Träger 7 zumindest ein Hohlraum 18, vorzugsweise in Form eines Kanals oder einer Wassertasche, zur Aufnahme und/oder Durchführung eines Kühlmittels ausgebildet ist. Weiters könnten in dem Träger 7 zumindest eine Durchführung für eine Gasleitung und/oder Vakuumleitung und/oder elektrische Leitung und/oder ein Thermoelement ausgebildet sein (nicht dargestellt).

Bereits aus Fig. 1 ist ersichtlich, dass die Industrieofenanlage 1 jeweils zumindest zwei, zu einer Einheit 20 zusammengefasste und durch die Steuereinrichtung 10 steuerbare Öfen 2 aufweist. Dabei ist die Steuereinrichtung 10 vorzugsweise derart ausgelegt, einen Ofen 2 der Einheit 20 durch Ansteuerung der Transfereinrichtung 11 und/oder Ansteuerung der Verschlusseinrichtung 6 zu entladen und/oder zu reinigen und/oder neu zu beschicken (linker Ofen in Fig. 3), während sich ein anderer Ofen 2 der Einheit 20 im Produktionsmodus befindet (rechter Ofen in Fig. 3).

Die Einheit 20 kann eine gemeinsame - vorzugsweise elektrische - Versorgungseinrichtung 21, vorzugsweise in Form eines Induktionsgenerators, für die Heizeinrichtungen 9 aufweisen, welche Versorgungseinrichtung 21 zwischen den Öfen 2 bzw. zwischen den Heizeinrichtungen 9 der Öfen 2 umschaltbar gestaltet sein kann. Im Falle einer Induktionsheizung wird - in Zusammenhang mit diesem Ausführungsbeispiel - unter Heizeinrichtung die Induktionsspule (gegebenenfalls zusammen mit dem Außenschwingkreis) verstanden. Als Versorgungseinrichtung dient dann ein Induktionsgenerator und/oder eine Wechselstromquelle.

Ebenso kann die Einheit 20 oder mehrere Einheiten 20 eine gemeinsame Pumpen- und/oder Gasbeschickungseinrichtung 22, 23 aufweisen (siehe ebenfalls Fig. 1). Alternativ könnte jeder Ofen 2 oder jede Einheit 20 eine eigene Pumpen- und/oder Gasbeschickungseinrichtung aufweisen.

Die Transfereinrichtung 11 kann auf einer Führungsbahn 25, z.B. auf Schienen, geführt sein, zumindest einen Roboterarm umfassen und/oder einen Endeffektor 14 in Form eines (Parallel- )Greifers umfassen.

Fig. 10 zeigt eine besonders bevorzugte Ausführungsform, bei der die Transfereinrichtung bzw. deren Endeffektor 14 eine Reinigungseinrichtung 19 umfasst und/oder trägt, wobei vorzugsweise die Reinigungseinrichtung 19 eine Bürste und/oder einen Sauger und/oder eine Druckluftzufuhr umfassen kann. Die Reinigungseinrichtung 16 könnte einen zusätzlichen, vom Greifer gesonderten Endeffektor der Transfereinrichtung 11 darstellen, oder als Hilfseinrichtung bei Bedarf vom Endeffektor gegriffen und gehalten werden. In letzterem Fall könnte die Reinigungseinrichtung 19 in einer Parkposition geparkt werden und bei Bedarf von der Transfereinrichtung aufgenommen werden. Allen diesen Varianten ist gemein, dass die Transfereinrichtung zusätzlich zu ihrer Funktion der Entnahme des Tiegels 5 aus der Kammer 3 die Funktion der Reinigung der Kammer übernimmt.

In der in Fig. 10 dargestellten Ausführungsform umfasst die Reinigungseinrichtung 19 neben einer rotierenden Bürste eine Abdeckung 19a in Form einer Bodenplatte, welche im Reinigungsmodus die Beschickungsöffnung 4 abdeckt bzw. verschließt, und eine Absaugeinrichtung 19b, welche die Rückstände (Staub, Ruß, etc.) aus der Kammer aussaugt. Durch die Abdeckung 19a wird während der Reinigung der Kammer verhindert, dass die Rückstände unkontrolliert aus der Kammer fallen und die Industrieofenanlage verschmutzen.

Fig. 9 zeigt schließlich in schematischer Weise, dass die Steuereinrichtung 10 mit einzelnen Komponenten der Industrieofenanlage 1 kommunikationsverbunden ist und diese ansteuert und/oder von diesen (Sensor-)Daten empfängt.

Schließlich bezieht sich die Erfindung auch auf ein Verfahren zum Betreiben einer Industrieofenanlage 1, insbesondere zur Herstellung von keramischen Werkstoffen und/oder Karbiden, insbesondere Siliziumkarbid, wobei zur Entnahme eines Tiegels 5 aus der Kammer 3 die Verschlusseinrichtung 6 - durch Betätigung der Transfereinrichtung 11 und/oder in Abhängigkeit von der Position der Transfereinrichtung 11 und/oder der Position eines Endeffektors 14 der Transfereinrichtung 11 - in die freigebende Stellung gebracht wird und/oder bei freigebender Stellung der Verschlusseinrichtung 6 ein Tiegel 5 - durch Betätigung der Transfereinrichtung 11 und/oder vorzugsweise in Abhängigkeit von der Position der Transfereinrichtung 11 und/oder der Position eines Endeffektors 14 der Transfereinrichtung 11 durch Betätigung einer von der Transfereinrichtung 11 gesonderten Entnahmeeinrichtung, insbesondere Absenkeinrichtung - durch die Beschickungsöffnung 4 aus der Kammer 3 entnommen, insbesondere abgesenkt, wird.

Wie bereits erwähnt kann nach dem Verbringen des Tiegels 5 aus der Kammer 3 die Kammer 3 mittels der Transfereinrichtung 11 gereinigt werden, wobei vorzugsweise ein Endeffektor 14 der Transfereinrichtung 11 eine Reinigungseinrichtung 19 umfasst und/oder während der Reinigung eine Reinigungseinrichtung 19 trägt, wobei vorzugsweise die Reinigungseinrichtung 19 eine Bürste und/oder einen Sauger und/oder eine Druckluftzufuhr umfasst.

In einer besonderen ausführungsform weist die Industrieofenanlage 1 eine Vielzahl von Öfen 2 auf, wobei vorzugsweise jeweils zwei Öfen 2 zu einer Einheit 20 zusammengefasst sind, und die Öfen 2 durch dieselbe Transfereinrichtung 11 entladen und/oder gereinigt und/oder beschickt werden, wobei die Öfen 2 jeweils zeitversetzt zueinander durch Aktivierung der Heizeinrichtung 9 in den Produktionsmodus gebracht werden.

Zur Entnahme eines Tiegels 5 aus der Kammer 3 fährt die Transfereinrichtung 11 mit einem Endeffektor 14 an die Beschickungsöffnung 4 heran und die Verschlusseinrichtung 6 wird - durch die Transfereinrichtung 11 und/oder zumindest einen Aktuator 15 der Verschlusseinrichtung 6 - in eine freigebende Stellung gebracht. Anschließend kann die Transfereinrichtung 11 den Tiegel 5 aus der Kammer 3 entnehmen, insbesondere absenken.

Der Industrieofen und das Verfahren zu dessen Betrieb eignet sich insbesondere zur Herstellung von keramischen Werkstoffen und/oder Karbiden, insbesondere zur Herstellung von Siliziumkarbid aus Siliziumoxid und Kohlenstoff, durch exotherme Reaktion und/oder zum (Re-aktions-)Sintern.

### Bezugszeichenaufstellung

- 1: Industrieofenanlage
- 2: Ofen
- 3: Kammer
- 4: Beschickungsöffnung
- 5: Tiegel
- 6: Verschlusseinrichtung
- 7: Träger
- 8: Sensor
- 9: Heizeinrichtung
- 10: Steuereinrichtung
- 11: Transfereinrichtung
- 12: Belade- und/oder Enladestation
- 13: Übergabestation
- 14: Endeffektor
- 15: Aktuator
- 16: Temperatursensor
- 17: Bodenplatte
- 18: Hohlraum
- 19: Reinigungseinrichtung
- 19a: Abdeckeinrichtung
- 19b: Absaugeinrichtung
- 20: Einheit
- 21: Versorgungseinrichtung
- 22: Pumpeneinrichtung
- 23: Gasbeschickungseinrichtung
- 24: Füße
- 25: Führungsbahn
- 26: Entnahmeeinrichtung (Absenkeinrichtung)

## Patentansprüche

1. Industrieofenanlage (1), insbesondere zur Herstellung von keramischen Werkstoffen und/oder Karbiden, insbesondere Siliziumkarbid, und/oder zum Sintern von Werkstoffen, umfassend
- zumindest einen Ofen (2), insbesondere Reaktionsofen, mit einer - vorzugsweise evakuierbaren und/oder mit inerter Atmosphäre beaufschlagbaren - Kammer (3), insbesondere Reaktionskammer, die eine, vorzugsweise an ihrer Unterseite angeordnete, Beschickungsöffnung (4) zum Beschicken der Kammer (3) mit einem mit - vorzugsweise pulverförmigem - Ausgangsmaterial befüllten Tiegel (5) aufweist, einer Heizeinrichtung (9), vorzugsweise in Form einer Induktionsspule und/oder Induktionsheizung, zum Erwärmen eines in die Kammer (3) eingebrachten Ausgangsmaterials und einer Verschlusseinrichtung (6) für die Beschickungsöffnung (4), welche Verschlusseinrichtung (6) zwischen einer geschlossenen Stellung und einer freigebenden Stellung betätigbar ist, und
- eine Steuereinrichtung (10) zum Steuern des zumindest einen Ofens (2)
**dadurch gekennzeichnet, dass** die Industrieofenanlage (1) eine Transfereinrichtung (11), vorzugsweise in Form eines Roboters, zum Transferieren eines durch die Beschickungsöffnung (4) in die Kammer (3) einbringbaren Tiegels (5) zu dem und/oder von dem Ofen (2), vorzugsweise zwischen dem Ofen (2) und einer Belade- und/oder Entladestation (12) zum Be- und/oder Entladen eines Tiegels (5) oder einer Übergabestation (13), aufweist,
wobei die Steuereinrichtung (10) dazu eingerichtet ist, zur Entnahme eines Tiegels (5) aus der Kammer (3)
die Verschlusseinrichtung (6) - in Abhängigkeit von der Position der Transfereinrichtung (11) und/oder der Position eines Endeffektors (14) der Transfereinrichtung (11) - in die freigebende Stellung zu bringen, wobei die Verschlusseinrichtung (6) zumindest einen eigenen, von der Transfereinrichtung (11) gesonderten Aktuator (15), der die Betätigung zwischen der geschlossenen Stellung und der freigebenden Stellung bewirkt, umfasst und wobei die Transfereinrichtung (11) als Trigger dient, derart, dass bei Erreichen einer bestimmten Position die Aktivierung der Verschlusseinrichtung (6) von der geschlossenen in die freigebende Stellung ausgelöst wird,
und/oder
bei freigebender Stellung der Verschlusseinrichtung (6) einen Tiegel (5) - durch Betätigung der Transfereinrichtung (11) und/oder in Abhängigkeit von der Position der Transfereinrichtung (11) und/oder der Position eines Endeffektors (14) der Transfereinrichtung (11) durch Betätigung einer von der Transfereinrichtung (11) gesonderten Entnahmeeinrichtung (26), insbesondere Absenkeinrichtung - durch die Beschickungsöffnung (4) aus der Kammer (3) entnehmen, insbesondere absenken, zu lassen.

2. Industrieofenanlage nach Anspruch 1, **dadurch gekennzeichnet, dass** die Verschlusseinrichtung (6) zumindest einen - vorzugsweise pneumatischen oder hydraulischen - Aktuator (15), der durch die Steuereinrichtung (10) betätigbar ist, aufweist.

3. Industrieofenanlage nach Anspruch 1 oder 2, **dadurch gekennzeichnet, dass** die Verschlusseinrichtung (6) durch die Steuereinrichtung (10) dann in eine freigebende Stellung gebracht wird, wenn sich die Transfereinrichtung (11) und/oder deren Endeffektor (14) in einer Position befindet, in der sie für eine Aufnahme des Tiegels (5) bzw. einen den Tiegel (5) tragenden Träger (7) bereit ist, vorzugsweise dann, wenn die Transfereinrichtung (11) im Bereich der Beschickungsöffnung (4) angekommen ist und/oder an die Kammer (3) oder den Träger (7) angedockt hat.

4. Industrieofenanlage nach Anspruch 2 oder 3, **dadurch gekennzeichnet, dass** die Steuereinrichtung (10) dazu eingerichtet ist, zur Entnahme eines Tiegels (5) aus der Kammer (3) die Verschlusseinrichtung (6) durch Betätigung des zumindest einen Aktuators (15) in die freigebende Stellung zu bringen, wenn ein Endeffektor (14) der Transfereinrichtung (11) vor und/oder unterhalb der Beschickungsöffnung (4) angeordnet ist und/oder wenn ein Endeffektor (14) der Transfereinrichtung (11) den Ofen (2) im Bereich der Beschickungsöffnung (4) kontaktiert und/oder wenn ein Endeffektor (14) der Transfereinrichtung (11) einen - sich in der Kammer (3) befindlichen Tiegel (5) tragenden - Träger (7) von außen kontaktiert.

5. Industrieofenanlage nach einem der vorhergehenden Ansprüche, **dadurch gekennzeichnet, dass** der Ofen (2) zumindest einen Sensor (8), vorzugsweise einen Berührungssensor und/oder Annäherungssensor, zur Detektion der Position der Transfereinrichtung (11) und/oder der Position eines Endeffektors (14) der Transfereinrichtung (11) aufweist, wobei vorzugsweise der Sensor (8) im Bereich der Beschickungsöffnung (4) angeordnet ist.

6. Industrieofenanlage nach einem der vorhergehenden Ansprüche, **dadurch gekennzeichnet, dass** die Steuereinrichtung (10) dazu eingerichtet ist, Daten über die Position der Transfereinrichtung (11) und/oder die Position eines Endeffektors (14) der Transfereinrichtung (11) von einem Sensor (8) und/oder von der Transfereinrichtung (11) selbst zu empfangen, und/oder dass die Steuereinrichtung (10) dazu eingerichtet ist, Daten von einem Temperatursensor (16) des Ofens (2) zu empfangen und in Abhängigkeit der Daten des Temperatursensors (16) die Transfereinrichtung (11) und/oder die Verschlusseinrichtung (6) anzusteuern.

7. Industrieofenanlage nach einem der vorhergehenden Ansprüche, **dadurch gekennzeichnet, dass** der Ofen (2) einen - vorzugsweise sockelartigen - Träger (7) zum Tragen eines in der Kammer (3) befindlichen Tiegels (5) aufweist, wobei der Träger (7) in seiner Betriebsposition die Beschickungsöffnung (4) verschließt und durch die Verschlusseinrichtung (6) fixiert ist und wobei der Träger (7) bei freigebender Stellung der Verschlusseinrichtung (6) aus seiner Betriebsposition von der Kammer (3) - vorzugsweise durch die Transfereinrichtung (11) - entnehmbar, insbesondere absenkbar, ist, wobei vorzugsweise ein Endeffektor (14) der Transfereinrichtung (11) ausgebildet ist, den Träger (7) im Bereich seiner Unterseite aufzunehmen und/oder einen auf dem Träger (7) befindlichen Tiegel (5) aufzunehmen, vorzugsweise mittels eines Greifers.

8. Industrieofenanlage nach Anspruch 7, **dadurch gekennzeichnet, dass** der Träger (7) in seiner Betriebsposition in das Innere der Kammer (3) ragt und/oder dass der Träger (7) an seiner Unterseite durch eine Bodenplatte (17) abgeschlossen ist und/oder dass der Träger (7) an seiner Unterseite nach unten ragende Füße (24) aufweist und/oder dass in oder an dem Träger (7) zumindest ein Temperatursensor (16), vorzugsweise in Form eines Thermoelements, zur Messung einer Temperatur in der Kammer (3) angeordnet ist und/oder dass der Träger (7) zumindest ein Wärmeschild, welches in einem Hohlraum des Trägers (7) angeordnet ist, aufweist und/oder dass in dem Träger (7) zumindest ein Hohlraum (18), vorzugsweise in Form eines Kanals oder einer Wassertasche, zum Aufnehmen und/oder zur Durchführung eines Kühlmittels ausgebildet ist und/oder dass in dem Träger (7) eine Durchführung für eine Gasleitung und/oder Vakuumleitung und/oder elektrische Leitung und/oder ein Thermoelement ausgebildet ist.

9. Industrieofenanlage nach einem der vorhergehenden Ansprüche, **dadurch gekennzeichnet, dass** die Industrieofenanlage (1) zumindest zwei, zu einer Einheit (20) zusammengefasste und durch die Steuereinrichtung (10) steuerbare Öfen (2) aufweist, und dass die Steuereinrichtung (10) eingerichtet ist, einen Ofen (2) der Einheit (20) durch Ansteuerung der Transfereinrichtung (11) und/oder Ansteuerung der Verschlusseinrichtung (6) zu entladen und/oder zu reinigen und/oder neu zu beschicken, während sich ein anderer Ofen (2) der Einheit (20) im Produktionsmodus befindet.

10. Industrieofenanlage nach einem der vorhergehenden Ansprüche, **dadurch gekennzeichnet, dass** die Industrieofenanlage (1) zumindest zwei, zu einer Einheit (20) zusammengefasste und durch die Steuereinrichtung (10) steuerbare Öfen (2) aufweist, wobei die Einheit (20) eine gemeinsame - vorzugsweise elektrische - Versorgungseinrichtung (21), vorzugsweise in Form eines Induktionsgenerators, für die - vorzugsweise in Form von Induktionsspulen ausgebildeten - Heizeinrichtungen (9) aufweist, welche Versorgungseinrichtung zwischen den Heizeinrichtungen (9) der Öfen (2) umschaltbar ist, und/oder die Einheit (20) eine gemeinsame, zwischen den Kammern (3) umschaltbare Pumpen- und/oder Gasbeschickungseinrichtung (22, 23) aufweist.

11. Industrieofenanlage nach einem der vorhergehenden Ansprüche, **dadurch gekennzeichnet, dass** die Transfereinrichtung (11) auf einer Führungsbahn (25) geführt ist und/oder dass die Transfereinrichtung (11) zumindest einen Roboterarm umfasst und/oder dass ein Endeffektor (14) der Transfereinrichtung (11) einen Greifer, vorzugsweise einen Parallelgreifer, umfasst und/oder dass ein Endeffektor (14) der Transfereinrichtung (11) eine Reinigungseinrichtung (19) umfasst und/oder trägt, wobei vorzugsweise die Reinigungseinrichtung (19) eine - vorzugsweise durch einen Antrieb in Rotation versetzbare - Bürste und/oder eine Absaugeinrichtung (19b) und/oder eine Druckluftzufuhr und/oder eine Abdeckung (19a), durch welche die Beschickungsöffnung (4) verschließbar ist, umfasst.

12. Verfahren zum Betreiben einer Industrieofenanlage (1), insbesondere zur Herstellung von keramischen Werkstoffen und/oder Karbiden, insbesondere Siliziumkarbid, wobei die Industrieofenanlage (1)
- zumindest einen Ofen (2), insbesondere Reaktionsofen, mit einer - vorzugsweise evakuierbaren und/oder mit inerter Atmosphäre beaufschlagbaren - Kammer (3), insbesondere Reaktionskammer, die eine, vorzugsweise an ihrer Unterseite angeordnete, Beschickungsöffnung (4) zum Beschicken der Kammer (3) mit einem mit - vorzugsweise pulverförmigem - Ausgangsmaterial befüllten Tiegel (5) aufweist, einer Heizeinrichtung (9), vorzugsweise in Form einer Induktionsspule und/oder Induktionsheizung, zum Erwärmen eines in die Kammer (3) eingebrachten Ausgangsmaterials und einer Verschlusseinrichtung (6) für die Beschickungsöffnung (4), welche Verschlusseinrichtung (6) zwischen einer geschlossenen Stellung und einer freigebenden Stellung betätigbar ist,
- eine Steuereinrichtung (10) zum Steuern des zumindest einen Ofens (2) und
- eine Transfereinrichtung (11), vorzugsweise in Form eines Roboters, zum Transferieren eines durch die Beschickungsöffnung (4) in die Kammer (3) einbringbaren Tiegels (5) zu dem und/oder von dem Ofen (2), vorzugsweise zwischen dem Ofen (2) und einer Belade- und/oder Entladestation (12) zum Be- und/oder Entladen eines Tiegels oder einer Übergabestation (13),
wobei zur Entnahme eines Tiegels (5) aus der Kammer (3)
die Verschlusseinrichtung (6) - in Abhängigkeit von der Position der Transfereinrichtung (11) und/oder der Position eines Endeffektors (14) der Transfereinrichtung (11) - in die freigebende Stellung gebracht wird, dass die Verschlusseinrichtung (6) zumindest einen eigenen, von der Transfereinrichtung (11) gesonderten Aktuator, der die Betätigung zwischen der geschlossenen Stellung und der freigebenden Stellung bewirkt, umfasst und wobei die Transfereinrichtung (11) als Trigger dient, derart, dass bei Erreichen einer bestimmten Position die Aktivierung der Verschlusseinrichtung (6) von der geschlossenen in die freigebende Stellung ausgelöst wird,
und/oder
bei freigebender Stellung der Verschlusseinrichtung (6) ein Tiegel (5) - durch Betätigung der Transfereinrichtung (11) und/oder vorzugsweise in Abhängigkeit von der Position der Transfereinrichtung (11) und/oder der Position eines Endeffektors (14) der Transfereinrichtung (11) durch Betätigung einer von der Transfereinrichtung (11) gesonderten Entnahmeeinrichtung (26), insbesondere Absenkeinrichtung - durch die Beschickungsöffnung (4) aus der Kammer (3) entnommen, insbesondere abgesenkt, wird.

13. Verfahren nach Anspruch 12, **dadurch gekennzeichnet, dass** die Industrieofenanlage (1) nach einem der Ansprüche 1 bis 11 ausgebildet ist.

14. Verfahren nach Anspruch 12 oder 13, **dadurch gekennzeichnet, dass** die Verschlusseinrichtung (6) durch die Steuereinrichtung (10) dann in eine freigebende Stellung gebracht wird, wenn sich die Transfereinrichtung (11) und/oder deren Endeffektor (14) in einer Position befindet, in der sie für eine Aufnahme des Tiegels (5) bzw. einen den Tiegel (5) tragenden Träger (7) bereit ist, vorzugsweise dann, wenn die Transfereinrichtung (11) im Bereich der Beschickungsöffnung (4) angekommen ist und/oder an die Kammer (3) oder den Träger (7) angedockt hat.

15. Verfahren nach einem der Ansprüche 12 bis 14, **dadurch gekennzeichnet, dass** nach dem Verbringen des Tiegels (5) aus der Kammer (3) die Kammer (3) mittels der Transfereinrichtung (11) gereinigt wird, wobei vorzugsweise ein Endeffektor (14) der Transfereinrichtung (11) eine Reinigungseinrichtung (19) umfasst und/oder während der Reinigung eine Reinigungseinrichtung (19) trägt, wobei vorzugsweise die Reinigungseinrichtung (19) eine - vorzugsweise durch einen Antrieb in Rotation versetzbare - Bürste und/oder eine Absaugeinrichtung (19b) und/oder eine Druckluftzufuhr und/oder eine Abdeckung (19a), durch welche die Beschickungsöffnung (4) verschließbar ist, umfasst.

16. Verfahren nach einem der Ansprüche 12 bis 15, **dadurch gekennzeichnet, dass** die Industrieofenanlage (1) zumindest zwei, zu einer Einheit (20) zusammengefasste und durch die Steuereinrichtung (10) steuerbare Öfen (2) aufweist und dass ein Ofen (2) der Einheit (20) durch Ansteuerung der Transfereinrichtung (11) und/oder Ansteuerung der Verschlusseinrichtung (6) entladen und/oder gereinigt und/oder neu beschickt wird, während sich ein anderer Ofen (2) der Einheit (20) im Produktionsmodus befindet.

17. Verfahren nach einem der Ansprüche 12 bis 16, **dadurch gekennzeichnet, dass** die Industrieofenanlage (1) eine Vielzahl von Öfen (2) aufweist, wobei vorzugsweise jeweils zwei Öfen (2) zu einer Einheit (20) zusammengefasst sind, und dass die Öfen (2) durch dieselbe Transfereinrichtung (11) entladen und/oder gereinigt und/oder beschickt werden, wobei die Öfen (2) jeweils zeitversetzt zueinander, vorzugsweise durch Evakuierung der Kammer (3) und/oder durch Einbringen einer inerten Atmosphäre in die Kammer (3) und/oder durch Aktivierung der Heizeinrichtung (9), in den Produktionsmodus gebracht werden.

18. Verfahren nach einem der Ansprüche 12 bis 17, **dadurch gekennzeichnet, dass** zur Entnahme eines Tiegels (5) aus der Kammer (3) die Transfereinrichtung (11) mit einem Endeffektor (14) an die Beschickungsöffnung (4) heranfährt und die Verschlusseinrichtung (6) - durch die Transfereinrichtung (11) und/oder zumindest einen Aktuator (15) der Verschlusseinrichtung (6) - in eine freigebende Stellung gebracht wird.

19. Verfahren nach einem der Ansprüche 12 bis 18, **dadurch gekennzeichnet, dass** die Transfereinrichtung (11) den Tiegel (5) aus der Kammer (3) entnimmt, insbesondere absenkt.

20. Verfahren nach einem der Ansprüche 12 bis 19, **dadurch gekennzeichnet, dass** der Ofen (2) einen - vorzugsweise sockelartigen - Träger (7) zum Tragen eines in der Kammer (3) befindlichen Tiegels (5) aufweist, wobei der Träger (7) in seiner Betriebsposition die Beschickungsöffnung (4) verschließt und durch die Verschlusseinrichtung (6) fixiert ist und wobei die Transfereinrichtung (11) den Tiegel (5) aus der Kammer (3) entnimmt, indem die Transfereinrichtung (11) den Träger (7) zusammen mit dem Tiegel (5) aus seiner Betriebsposition von der Kammer (3) entnimmt, insbesondere absenkt.

21. Verfahren nach Anspruch 20, **dadurch gekennzeichnet, dass** ein Endeffektor (14) der Transfereinrichtung (11) den Tiegel (5) von dem entnommenen, insbesondere abgesenkten, Träger (7) entnimmt, wobei vorzugsweise die Transfereinrichtung (11) den entnommenen Träger (7) zu einer Belade- und/oder Entladestation (12) zum Be- und/oder Entladen des Tiegels (5) oder einer Übergabestation (13) transferiert.

22. Verfahren zur Herstellung von keramischen Werkstoffen und/oder Karbiden, insbesondere zur Herstellung von Siliziumkarbid aus Siliziumoxid und Kohlenstoff, durch exotherme Reaktion und/oder zum Sintern von Werkstoffen, wobei vorzugsweise pulverförmige Ausgangsmaterialien, insbesondere ein Oxid und Kohlenstoff, in einen Tiegel (5) gefüllt werden, wobei der befüllte Tiegel (5) in einen Ofen (2) einer Industrieofenanlage (1) verbracht wird, **dadurch gekennzeichnet, dass** die Industrieofenanlage (1) nach einem der Ansprüche 1 bis 11 ausgebildet ist und/oder dass die Industrieofenanlage (1) gemäß einem Verfahren nach einem der Ansprüche 12 bis 21 betrieben wird.

## Claims

1. An industrial furnace system (1), in particular for producing ceramic materials and/or carbides, in particular silicon carbide, and/or for sintering materials, comprising
- at least one furnace (2), in particular a reaction furnace, with a chamber (3) - preferably one which can be evacuated and/or can have an inert atmosphere applied to it -, in particular a reaction chamber, which chamber (3) has a loading opening (4), preferably arranged on its underside, for loading the chamber (3) with a crucible (5) which is filled with a - preferably powdered - starting material, a heating device (9), preferably in the form of an induction coil and/or induction heater, for heating a starting material brought into the chamber (3) and a closure device (6) for the loading opening (4), where said closure device (6) can be actuated between a closed position and a release position, and
- a control device (10) for controlling the at least one furnace (2) **characterized in that** the industrial furnace system (1) has a transfer device (11), preferably in the form of a robot, for transferring a crucible (5) that can be brought into the chamber (3) through the loading opening (4) to the and/or from the furnace (2), preferably between the furnace (2) and a loading and/or unloading station (12) for loading and/or unloading a crucible (5) or a transfer station (13),
wherein, for removal of the crucible (5) from the chamber (3), the control device (10) is configured
to bring the closure device (6) - depending on the position of the transfer device (11) and/or the position of an end effector (14) of the transfer device (11) - into the release position, wherein the closure device (6) comprises at least one own actuator (15) which is separate from the transfer device (11) and which performs the actuation between the closed position and the release position, and wherein the transfer device (11) serves as a trigger in such a way that upon reaching a certain position the activation of the closure device (6) from the closed to the release position is triggered,
and/or
when the closure device (6) is in the release position, to allow for a crucible (5) to be removed, in particular to be lowered, through the loading opening (4) from the chamber (3) by actuating the transfer device (11) and/or depending on the position of the transfer device (11) and/or on the position of an end effector (14) of the transfer device (11) by actuating a removal device (26), in particular a lowering device, which is separate from the transfer device (11).

2. The industrial furnace system according to Claim 1, **characterized in that** the closure device (6) has at least one, preferably pneumatic or hydraulic, actuator (15) which can be actuated by the control device (10).

3. The industrial furnace system according to Claim 1 or 2, **characterized in that** the closure device (6) is brought by the control device (10) into a release position when the transfer device (11) and/or its end effector (14) is in a position in which it is ready to receive the crucible (5) and/or a support (7) supporting the crucible (5), preferably when the transfer device (11) has arrived in the region of the loading opening (4) and/or has docked with the chamber (3) and/or the support (7).

4. The industrial furnace system according to Claim 2 or 3, **characterized in that**, for removal of a crucible (5) from the chamber (3), the control device (10) is configured to bring the closure device (6) into the release position by actuating the at least one actuator (15) if an end effector (14) of the transfer device (11) is arranged in front of and/or beneath the loading opening (4) and/or if an end effector (14) of the transfer device (11) contacts the furnace (2) in the region of the loading opening (4) and/or if an end effector (14) of the transfer device (11) contacts a support (7), which is supporting a crucible (5) located in the chamber (3), from the outside.

5. The industrial furnace system according to one of the preceding claims, **characterized in that** the furnace (2) has at least one sensor (8), preferably a contact sensor and/or proximity sensor for detecting the position of the transfer device (11) and/or the position of an end effector (14) of the transfer device (11), wherein preferably the sensor (8) is arranged in the region of the loading opening (4).

6. The industrial furnace system according to one of the preceding claims, **characterized in that** the control device (10) is configured to receive data about the position of the transfer device (11) and/or the position of an end effector (14) of the transfer device (11) from a sensor (8) and/or from the transfer device (11) itself, and/or that the control device (10) is configured to receive data from a temperature sensor (16) of the furnace (2) and to control the transfer device (11) and/or the closure device (6) depending on the data of the temperature sensor (16).

7. The industrial furnace system according to one of the preceding claims, **characterized in that** the furnace (2) has a, preferably pedestal-like, support (7) for supporting a crucible (5) located in the chamber (3), wherein in its operating position the support (7) closes the loading opening (4) and is fixed by the closure device (6) and wherein the support (7), when the closure device (6) is in its release position, can be removed from, in particular lowered out of, the chamber (3), preferably by means of the transfer device (11), wherein preferably an end effector (14) of the transfer device (11) is configured to receive the support (7) in the region of its underside and/or to receive a crucible (5) located on the support (7), preferably by means of a gripper.

8. The industrial furnace system according to Claim 7, **characterized in that** in its operating position the support (7) protrudes into the inside of the chamber (3) and/or that the support (7) is closed off on its underside by a base plate (17) and/or that the support (7) has feet (24) protruding downwards on its underside and/or that at least one temperature sensor (16), preferably in the form of a thermocouple, is arranged in or on the support (7) for measuring a temperature in the chamber (3) and/or that the support (7) has at least one heat shield which is arranged in a cavity of the support (7) and/or that at least one cavity (18), preferably in the form of a duct or a water pocket, for receiving and/or conducting a coolant is arranged in the support (7) and/or that a passage is configured in the support (7) for a gas line and/or vacuum line and/or electrical line and/or a thermocouple.

9. The industrial furnace system according to one of the preceding claims, **characterized in that** the industrial furnace system (1) has at least two furnaces (2) combined into one unit (20) and controllable by the control device (10), and that the control device (10) is configured to unload and/or to clean and/or to reload one furnace (2) of the unit (20) by controlling the transfer device (11) and/or by controlling the closure device (6) while another furnace (2) of the unit (20) is in production mode.

10. The industrial furnace system according to one of the preceding claims, **characterized in that** the industrial furnace system (1) has at least two furnaces (2) combined into one unit (20) and controllable by the control device (10), wherein the unit (20) has a common, preferably electric, supply device (21), preferably in the form of an induction generator for the heating devices (9), which are preferably configured as induction coils, said supply device being switchable between the heating devices (9) of the furnaces (2), and/or wherein the unit (20) has one common pump and/or gas loading device (22, 23) which is switchable between the chambers (3).

11. The industrial furnace system according to one of the preceding claims, **characterized in that** the transfer device (11) is guided on a guideway (25) and/or that the transfer device (11) comprises at least one robotic arm and/or that an end effector (14) of the transfer device (11) comprises a gripper, preferably a parallel gripper, and/or that an end effector (14) of the transfer device (11) comprises and/or carries a cleaning device (19), wherein preferably the cleaning device (19) comprises a brush, which can preferably be set into rotation by a drive, and/or a suction device (19b) and/or a compressed air supply and/or a cover (19a) by means of which the loading opening (4) can be closed.

12. A method for operating an industrial furnace system (1), in particular for producing ceramic materials and/or carbides, in particular silicon carbide, wherein the industrial furnace system (1) has
- at least one furnace (2), in particular a reaction furnace, with a chamber (3) - preferably one which can be evacuated and/or can have an inert atmosphere applied to it -, in particular a reaction chamber, which chamber (3) has a loading opening (4), preferably arranged on its underside, for loading the chamber (3) with a crucible (5) which is filled with a - preferably powdered - starting material, a heating device (9), preferably in the form of an induction coil and/or induction heater, for heating a starting material brought into the chamber (3) and a closure device (6) for the loading opening (4), said closure device (6) being actuable between a closed position and a release position,
- a control device (10) for controlling the at least one furnace (2) and
- a transfer device (11), preferably in the form of a robot, for transferring a crucible (5) that can be brought into the chamber (3) through the loading opening (4) to the and/or from the furnace (2), preferably between the furnace (2) and a loading and/or unloading station (12) for loading and/or unloading a crucible or a transfer station (13),
wherein for removing the crucible (5) from the chamber (3)
the closure device (6) is brought into the release position depending on the position of the transfer device (11) and/or the position of an end effector (14) of the transfer device (11), that the closure device (6) comprises at least one own actuator (15) which is separate from the transfer device (11) and which performs the actuation between the closed position and the release position, and wherein the transfer device (11) serves as a trigger in such a way that upon reaching a certain position the activation of the closure device (6) from the closed to the release position is triggered,
and/or
when the closure device (6) is in the release position, a crucible (5) is removed, in particular is lowered, through the loading opening (4) from the chamber (3) by actuating the transfer device (11) and/or preferably depending on the position of the transfer device (11) and/or the position of an end effector (14) of the transfer device (11) by actuating a removal device (26), in particular a lowering device, which is separate from the transfer device (11).

13. The method according to Claim 12, **characterized in that** the industrial furnace system (1) is configured according to one of Claims 1 to 11.

14. The method according to Claim 12 or 13, **characterized in that** the closure device (6) is brought by the control device (10) into a release position when the transfer device (11) and/or its end effector (14) is in a position in which it is ready to receive the crucible (5) and/or a support (7) supporting the crucible (5), preferably when the transfer device (11) has arrived in the region of the loading opening (4) and/or has docked with the chamber (3) and/or the support (7).

15. The method according to one of Claims 12 to 14, **characterized in that** following the removal of the crucible (5) from the chamber (3) the chamber (3) is cleaned by means of the transfer device (11), wherein preferably an end effector (14) of the transfer device (11) comprises a cleaning device (19) and/or carries a cleaning device (19) during cleaning, wherein preferably the cleaning device (19) comprises a brush, which can preferably be set into rotation by a drive, and/or a suction device (19b) and/or a compressed air supply and/or a cover (19a), by means of which the loading opening (4) can be closed.

16. The method according to one of Claims 12 to 15, **characterized in that** the industrial furnace system (1) has at least two furnaces (2) combined into one unit (20) and controllable by the control device (10), and that one furnace (2) of the unit (20) is unloaded and/or cleaned and/or reloaded by controlling the transfer device (11) and/or by controlling the closure device (6) while another furnace (2) of the unit (20) is in production mode.

17. The method according to one of Claims 12 to 16, **characterized in that** the industrial furnace system (1) has a plurality of furnaces (2), wherein preferably two furnaces (2) are combined into one unit (20), and that the furnaces (2) are unloaded and/or cleaned and/or loaded by means of the same transfer device (11), wherein the furnaces (2) are put into production mode with a time offset, preferably by means of evacuating the chamber (3) and/or by introducing an inert atmosphere into the chamber (3) and/or by activating the heating device (9).

18. The method according to one of Claims 12 to 17, **characterized in that** for removing a crucible (5) from the chamber (3) the transfer device (11) approaches the loading opening (4) with an end effector (14) and the closure device (6) is brought into a release position by means of the transfer device (11) and/or at least one actuator (15) of the closure device (6).

19. The method according to one of Claims 12 to 18, **characterized in that** the transfer device (11) removes, in particular lowers, the crucible (5) from the chamber (3).

20. The method according to one of Claims 12 to 19, **characterized in that** the furnace (2) has a, preferably pedestal-like, support (7) for supporting a crucible (5) located in the chamber (3), wherein when in its operating position the support (7) closes the loading opening (4) and is fixed by the closure device (6) and wherein the transfer device (11) removes the crucible (5) from the chamber (3) **in that** the transfer device (11) removes, in particular lowers, the support (7) together with the crucible (5) from its operating position from the chamber (3).

21. The method according to Claim 20, **characterized in that** an end effector (14) of the transfer device (11) removes the crucible (5) from the removed, in particular lowered, support (7), wherein preferably the transfer device (11) transfers the removed support (7) to a loading and/or unloading station (12) to load or unload the crucible (5) or to a transfer station (13).

22. A method for producing ceramic materials and/or carbides, in particular for producing silicon carbide from silicon oxide and carbon, by means of exothermic reaction and/or for the sintering of materials, wherein preferably powdered starting materials, in particular an oxide and carbon, are filled into a crucible (5), wherein the filled crucible (5) is placed into a furnace (2) of an industrial furnace system (1), **characterized in that** the industrial furnace system (1) is configured according to one of Claims 1 to 11 and/or that the industrial furnace system (1) is operated according to a method according to one of Claims 12 to 21.

## Revendications

1. Système de four industriel (1), en particulier pour la fabrication de matériaux céramiques et/ou de carbures, en particulier de carbure de silicium, et/ou pour le frittage de matériaux, comprenant
- au moins un four (2), en particulier un four de réaction, avec une chambre (3) qui de préférence peut être évacuée et/ou soumise à une atmosphère inerte, en particulier une chambre de réaction, qui présente une ouverture de chargement (4), de préférence disposée sur sa face inférieure, pour charger dans la chambre (3) un creuset (5) rempli d'un matériau de départ de préférence pulvérulent, un dispositif de chauffage (9), de préférence sous la forme d'une bobine d'induction et/ou d'un chauffage par induction, pour chauffer un matériau de départ introduit dans la chambre (3), et un dispositif de fermeture (6) pour l'ouverture de chargement (4), lequel dispositif de fermeture (6) peut être actionné entre une position fermée et une position de libération, et
- un dispositif de commande (10) pour commander ledit au moins un four (2), **caractérisé en ce que** le système de four industriel (1) présente un dispositif de transfert (11), de préférence sous la forme d'un robot, pour transférer un creuset (5) pouvant être introduit dans la chambre (3) par l'ouverture de chargement (4) vers le four (2) et/ou depuis celui-ci, de préférence entre le four (2) et une station de chargement et/ou de déchargement (12) pour charger et/ou décharger un creuset (5) ou une station de transfert (13),
dans lequel le dispositif de commande (10) est configuré pour retirer un creuset (5) hors de la chambre (3),
pour amener le dispositif de fermeture (6) dans la position de libération en fonction de la position du dispositif de transfert (11) et/ou de la position d'un effecteur terminal (14) du dispositif de transfert (11), le dispositif de fermeture (6) comprenant au moins un actionneur propre (15), séparé du dispositif de transfert (11), qui provoque l'actionnement entre la position fermée et la position de libération, et le dispositif de transfert (11) servant de déclencheur, de telle sorte que, lorsqu'une position déterminée est atteinte, l'activation du dispositif de fermeture (6) de la position fermée vers la position de libération est déclenchée,
et/ou
pour retirer, en particulier abaisser, un creuset (5) hors de la chambre (3) à travers l'ouverture de chargement (4) lorsque le dispositif de fermeture (6) est en position de libération, par l'actionnement du dispositif de transfert (11) et/ou, en fonction de la position du dispositif de transfert (11) et/ou de la position d'un effecteur terminal (14) du dispositif de transfert (11), par l'actionnement d'un dispositif de retrait (26), en particulier d'un dispositif d'abaissement, séparé du dispositif de transfert (11).

2. Système de four industriel selon la revendication 1, **caractérisé en ce que** le dispositif de fermeture (6) présente au moins un actionneur (15), de préférence pneumatique ou hydraulique, qui peut être actionné par le dispositif de commande (10).

3. Système de four industriel selon la revendication 1 ou la revendication 2, **caractérisé en ce que** le dispositif de fermeture (6) est amené par le dispositif de commande (10) dans une position de libération lorsque le dispositif de transfert (11) et/ou son effecteur terminal (14) se trouve dans une position dans laquelle il est prêt à recevoir le creuset (5) ou bien un support (7) portant le creuset (5), de préférence lorsque le dispositif de transfert (11) est arrivé dans la zone de l'ouverture de chargement (4) et/ou s'est amarré à la chambre (3) ou au support (7).

4. Système de four industriel selon la revendication 2 ou la revendication 3, **caractérisé en ce que** le dispositif de commande (10) est configuré, pour retirer un creuset (5) hors de la chambre (3), pour amener le dispositif de fermeture (6) dans la position de libération par actionnement dudit au moins un actionneur (15), lorsqu'un effecteur terminal (14) du dispositif de transfert (11) est disposé devant et/ou en dessous de l'ouverture de chargement (4) et/ou lorsqu'un effecteur terminal (14) du dispositif de transfert (11) vient en contact avec le four (2) dans la zone de l'ouverture de chargement (4) et/ou lorsqu'un effecteur terminal (14) du dispositif de transfert (11) vient en contact de l'extérieur avec un support (7) portant un creuset (5) qui se trouve dans la chambre (3).

5. Système de four industriel selon l'une des revendications précédentes, **caractérisé en ce que** le four (2) présente au moins un capteur (8), de préférence un capteur de contact et/ou un capteur de proximité, pour détecter la position du dispositif de transfert (11) et/ou la position d'un effecteur terminal (14) du dispositif de transfert (11), le capteur (8) étant de préférence disposé dans la zone de l'ouverture de chargement (4).

6. Système de four industriel selon l'une des revendications précédentes, **caractérisé en ce que** le dispositif de commande (10) est configuré pour recevoir des données sur la position du dispositif de transfert (11) et/ou sur la position d'un effecteur terminal (14) du dispositif de transfert (11) à partir d'un capteur (8) et/ou du dispositif de transfert (11) lui-même, et/ou **en ce que** le dispositif de commande (10) est configuré pour recevoir des données d'un capteur de température (16) du four (2) et, en fonction des données du capteur de température (16), pour commander le dispositif de transfert (11) et/ou le dispositif de fermeture (6).

7. Système de four industriel selon l'une des revendications précédentes, **caractérisé en ce que** le four (2) présente un support (7), de préférence en forme de socle, pour porter un creuset (5) se trouvant dans la chambre (3), le support (7) fermant l'ouverture de chargement (4) dans sa position de fonctionnement et étant fixé par le dispositif de fermeture (6), et le support (7) pouvant être retiré, en particulier abaissé, depuis sa position de fonctionnement hors de la chambre (3), de préférence par le dispositif de transfert (11), lorsque le dispositif de fermeture (6) est dans la position de libération, un effecteur terminal (14) du dispositif de transfert (11) étant de préférence conçu pour recevoir le support (7) dans la zone de sa face inférieure et/ou pour recevoir un creuset (5) se trouvant sur le support (7), de préférence au moyen d'une pince.

8. Système de four industriel selon la revendication 7, **caractérisé en ce que** le support (7) fait saillie à l'intérieur de la chambre (3) dans sa position de fonctionnement et/ou **en ce que** le support (7) est fermé sur sa face inférieure par une plaque de fond (17) et/ou **en ce que** le support (7) présente sur sa face inférieure des pieds (24) faisant saillie vers le bas et/ou **en ce qu'**au moins un capteur de température (16), de préférence sous la forme d'un thermocouple, est disposé dans ou sur le support (7) pour mesurer une température dans la chambre (3) et/ou **en ce que** le support (7) présente au moins un écran thermique disposé dans une cavité du support (7), et/ou **en ce qu'**au moins une cavité (18), de préférence sous la forme d'un conduit ou d'une poche d'eau, est formée dans le support (7) pour recevoir et/ou faire passer un fluide de refroidissement, et/ou **en ce qu'**un passage pour une conduite de gaz et/ou une conduite de vide et/ou une conduite électrique et/ou un thermocouple est formé dans le support (7).

9. Système de four industriel selon l'une des revendications précédentes, **caractérisé en ce que** le système de four industriel (1) présente au moins deux fours (2), regroupés en une unité (20) et pouvant être commandés par le dispositif de commande (10), et **en ce que** le dispositif de commande (10) est configuré pour décharger et/ou nettoyer et/ou recharger un four (2) de l'unité (20) en commandant le dispositif de transfert (11) et/ou en commandant le dispositif de fermeture (6) tandis qu'un autre four (2) de l'unité (20) se trouve en mode production.

10. Système de four industriel selon l'une des revendications précédentes, **caractérisé en ce que** le système de four industriel (1) présente au moins deux fours (2), regroupés en une unité (20) et pouvant être commandés par le dispositif de commande (10), l'unité (20) présentant un dispositif d'alimentation commun (21), de préférence électrique, de préférence sous la forme d'un générateur à induction, pour les dispositifs de chauffage (9), de préférence réalisés sous la forme de bobines d'induction, lequel dispositif d'alimentation est commutable entre les dispositifs de chauffage (9) des fours (2), et/ou l'unité (20) présente un dispositif de pompage et/ou d'alimentation en gaz (22, 23) commun commutable entre les chambres (3).

11. Système de four industriel selon l'une des revendications précédentes, **caractérisé en ce que** le dispositif de transfert (11) est guidé sur une voie de guidage (25) et/ou **en ce que** le dispositif de transfert (11) comprend au moins un bras de robot et/ou **en ce qu'**un effecteur terminal (14) du dispositif de transfert (11) comprend une pince, de préférence une pince parallèle, et/ou **en ce qu'**un effecteur terminal (14) du dispositif de transfert (11) comprend un dispositif de nettoyage (19) et/ou porte celui-ci, le dispositif de nettoyage (19) comprenant de préférence une brosse, de préférence mise en rotation par un entraînement, et/ou un dispositif d'aspiration (19b) et/ou une alimentation en air comprimé et/ou un couvercle (19a) au moyen duquel l'ouverture de chargement (4) peut être fermée.

12. Procédé d'exploitation d'un système de four industriel (1), en particulier pour la fabrication de matériaux céramiques et/ou de carbures, en particulier de carbure de silicium, le système de four industriel (1) comprenant
- au moins un four (2), en particulier un four de réaction, avec une chambre (3) qui de préférence peut être évacuée et/ou soumise à une atmosphère inerte, en particulier une chambre de réaction, qui présente une ouverture de chargement (4), de préférence disposée sur sa face inférieure, pour charger la chambre (3) avec un creuset (5) rempli d'un matériau de départ de préférence pulvérulent, un dispositif de chauffage (9), de préférence sous la forme d'une bobine d'induction et/ou d'un chauffage par induction, pour chauffer un matériau de départ introduit dans la chambre (3), et un dispositif de fermeture (6) pour l'ouverture de chargement (4), lequel dispositif de fermeture (6) peut être actionné entre une position fermée et une position de libération,
- un dispositif de commande (10) pour commander ledit au moins un four (2), et
- un dispositif de transfert (11), de préférence sous la forme d'un robot, pour transférer un creuset (5) pouvant être introduit dans la chambre (3) par l'ouverture de chargement (4) vers le four (2) et/ou depuis celui-ci, de préférence entre le four (2) et une station de chargement et/ou de déchargement (12) pour charger et/ou décharger un creuset ou une station de transfert (13),
dans lequel, pour retirer un creuset (5) hors de la chambre (3),
le dispositif de fermeture (6) est amené dans la position de libération en fonction de la position du dispositif de transfert (11) et/ou de la position d'un effecteur terminal (14) du dispositif de transfert (11), le dispositif de fermeture (6) comprenant au moins un actionneur propre, séparé du dispositif de transfert (11), qui provoque l'actionnement entre la position fermée et la position de libération, et le dispositif de transfert (11) servant de déclencheur, de telle sorte que lorsqu'une position déterminée est atteinte, l'activation du dispositif de fermeture (6) de la position fermée vers la position de libération est déclenchée,
et/ou
un creuset (5) est retiré, en particulier abaissé, hors de la chambre (3) à travers l'ouverture de chargement (4) lorsque le dispositif de fermeture (6) est dans la position de libération par l'actionnement du dispositif de transfert (11) et/ou, de préférence en fonction de la position du dispositif de transfert (11) et/ou de la position d'un effecteur terminal (14) du dispositif de transfert (11), par l'actionnement d'un dispositif de retrait (26), en particulier d'un dispositif d'abaissement, séparé du dispositif de transfert (11).

13. Procédé selon la revendication 12, **caractérisé en ce que** le système de four industriel (1) est configuré selon l'une des revendications 1 à 11.

14. Procédé selon la revendication 12 ou 13, **caractérisé en ce que** le dispositif de fermeture (6) est amené par le dispositif de commande (10) dans une position de libération lorsque le dispositif de transfert (11) et/ou son effecteur terminal (14) se trouve dans une position dans laquelle il est prêt à recevoir le creuset (5) ou bien un support (7) portant le creuset (5), de préférence lorsque le dispositif de transfert (11) est arrivé dans la zone de l'ouverture de chargement (4) et/ou s'est amarré à la chambre (3) ou au support (7).

15. Procédé selon l'une des revendications 12 à 14, **caractérisé en ce qu'**après le déplacement du creuset (5) hors de la chambre (3), la chambre (3) est nettoyée au moyen du dispositif de transfert (11), un effecteur terminal (14) du dispositif de transfert (11) comprenant de préférence un dispositif de nettoyage (19) et/ou portant un dispositif de nettoyage (19) pendant le nettoyage, le dispositif de nettoyage (19) comprenant de préférence une brosse, de préférence mise en rotation par un entraînement, et/ou un dispositif d'aspiration (19b) et/ou une alimentation en air comprimé et/ou un couvercle (19a) au moyen duquel l'ouverture de chargement (4) peut être fermée.

16. Procédé selon l'une des revendications 12 à 15, **caractérisé en ce que** le système de four industriel (1) présente au moins deux fours (2) regroupés en une unité (20) et commandables par le dispositif de commande (10), et **en ce qu'**un four (2) de l'unité (20) est déchargé et/ou nettoyé et/ou rechargé en commandant le dispositif de transfert (11) et/ou en commandant le dispositif de fermeture (6) tandis qu'un autre four (2) de l'unité (20) se trouve en mode de production.

17. Procédé selon l'une des revendications 12 à 16, **caractérisé en ce que** le système de four industriel (1) présente une pluralité de fours (2), de préférence deux fours (2) regroupés à chaque fois en une unité (20), et **en ce que** les fours (2) sont déchargés et/ou nettoyés et/ou chargés par le même dispositif de transfert (11), les fours (2) étant mis en mode de production chacun avec un décalage temporel, de préférence par évacuation de la chambre (3) et/ou par introduction d'une atmosphère inerte dans la chambre (3) et/ou par activation du dispositif de chauffage (9).

18. Procédé selon l'une des revendications 12 à 17, **caractérisé en ce que**, pour retirer un creuset (5) hors de la chambre (3), le dispositif de transfert (11) est amené avec un effecteur terminal (14) vers l'ouverture de chargement (4) et le dispositif de fermeture (6) est amené dans une position de libération par le dispositif de transfert (11) et/ou par au moins un actionneur (15) du dispositif de fermeture (6).

19. Procédé selon l'une des revendications 12 à 18, **caractérisé en ce que** le dispositif de transfert (11) retire le creuset (5) hors de la chambre (3), en particulier l'abaisse.

20. Procédé selon l'une des revendications 12 à 19, **caractérisé en ce que** le four (2) présente un support (7), de préférence en forme de socle, pour porter un creuset (5) qui se trouve dans la chambre (3), le support (7) fermant l'ouverture de chargement (4) dans sa position de fonctionnement et étant fixé par le dispositif de fermeture (6), et **en ce que** le dispositif de transfert (11) retire le creuset (5) hors de la chambre (3) en retirant, en particulier en abaissant, le support (7) avec le creuset (5) depuis sa position de fonctionnement hors de la chambre (3).

21. Procédé selon la revendication 20, **caractérisé en ce qu'**un effecteur terminal (14) du dispositif de transfert (11) retire le creuset (5) du support (7) retiré, en particulier abaissé, le dispositif de transfert (11) transférant de préférence le support (7) retiré vers une station de chargement et/ou de déchargement (12) pour charger et/ou décharger le creuset (5) ou vers une station de transfert (13).

22. Procédé de fabrication de matériaux céramiques et/ou de carbures, en particulier de fabrication de carbure de silicium à partir d'oxyde de silicium et de carbone, par une réaction exothermique, et/ou de frittage de matériaux, dans lequel des matériaux de départ de préférence pulvérulents, en particulier un oxyde et du carbone, sont de préférence versés dans un creuset (5), le creuset (5) rempli étant introduit dans un four (2) d'un système de four industriel (1), **caractérisé en ce que** le système de four industriel (1) est configuré selon l'une des revendications 1 à 11 et/ou **en ce que** le système de four industriel (1) est exploité conformément à un procédé selon l'une des revendications 12 à 21.
